# EUROPÄISCHE PATENTSCHRIFT

(11) **EP 3 444 212 B1**
(45) Veröffentlichungstag und Bekanntmachung des Hinweises auf die Patenterteilung: **19.05.2021**
(21) Anmeldenummer: 18182908.6
(22) Anmeldetag: 11.07.2018
(51) Int. Cl.: B65H 16/02, B65H 16/10, B65H 19/18, B65H 35/08, B65H 35/00, A22C 17/00, B26D 7/32, B26D 7/01

(54) **BEREITSTELLEN VON BAHNFÖRMIGEM ZWISCHENBLATTMATERIAL AN EINEM SCHNEIDBEREICH**
PROVISION OF WEB-SHAPED SHEET MATERIAL TO A CUTTING AREA
FOURNITURE DE MATÉRIAU DE FEUILLE INTERMÉDIAIRE EN FORME DE BANDE À UNE ZONE DE COUPE

(30) Priorität: 18.08.2017 DE 102017118921
(43) Veröffentlichungstag der Anmeldung: 20.02.2019
(73) Patentinhaber: Weber Maschinenbau GmbH Breidenbach, 35236 Breidenbach (DE)
(72) Erfinder: Reisz, Carsten, 35236 Breidenbach (DE)
(74) Vertreter: Manitz Finsterwald Patent- und Rechtsanwaltspartnerschaft mbB

(56) Entgegenhaltungen:
- EP-A1- 2 848 380
- EP-B1- 1 441 883

## Beschreibung

Die Erfindung betrifft ein Verfahren zum mehrspurigen Bereitstellen von bahnförmigem Zwischenblattmaterial an einem Schneidbereich, in welchem mehrspurig zugeführte Produkte in Scheiben geschnitten und Zwischenblätter eingebracht werden, die im Schneidbereich von dem bereitgestellten Zwischenblattmaterial abgetrennt werden und für die eine von der jeweiligen Anwendung abhängige Normallänge vorgegeben wird. Bei diesem Verfahren werden die Materialbahnen von zumindest zwei Materialvorräten abgenommen, die jeweils einer oder mehreren Spuren zugeordnet sind.

Derartige Verfahren und Vorrichtungen zu deren Ausführung sind auf dem Gebiet des Aufschneidens von Lebensmittelprodukten grundsätzlich bekannt, beispielsweise aus EP 2 848 380 A1 oder aus EP 1 441 883 B1.

Im Schneidbereich können folglich von den Produkten abgetrennte Scheiben mit den in den Schneidbereich eingebrachten Zwischenblättern versehen werden. Dabei können entweder Zwischenblätter jeweils zwischen zwei unmittelbar aufeinanderfolgende Scheiben eingebracht oder Zwischenblätter jeweils unter eine Scheibe und somit zwischen diese Scheibe und eine Auflagefläche dieser Scheibe eingebracht werden. Bei der Bildung von Portionen aus mehreren Scheiben beispielsweise befindet sich dann jeweils ein Zwischenblatt unter der untersten Scheibe einer Portion. Eine solche Underleaver-Funktion schließt aber nicht aus, dass bei der Bildung von Portionen jeweils ein Zwischenblatt nicht nur unter der untersten Scheibe liegt, sondern ein oder mehrere Zwischenblätter auch innerhalb der Portion jeweils zwischen zwei aufeinanderfolgende Scheiben eingebracht werden. Unabhängig davon, ob eine Underleaver-Funktion vorgesehen ist oder nicht, kann generell innerhalb einer Portion entweder zwischen jedem Paar unmittelbar aufeinanderfolgender Scheiben oder nur zwischen einem oder mehreren Paaren unmittelbar aufeinanderfolgender Scheiben jeweils ein Zwischenblatt eingebracht werden, z.B. zwischen jedem n-ten Paar mit n > 1.

Derartige Vorrichtungen sind auf dem Gebiet des Aufschneidens von Lebensmittelprodukten grundsätzlich bekannt und werden auch als Interleaver bzw. Underleaver bezeichnet. Dabei kann - wie vorstehend erwähnt - ein Interleaver auch eine Underleaver-Funktion ausüben, und umgekehrt. Die vorliegende Offenbarung gilt also nicht nur für die hier in erster Linie erläuterten Interleaver bzw. das Bereitstellen von Zwischenblättern bzw. Zwischenblattmaterial, sondern auch für sogenannte "Underleaver", die dazu dienen, Produkten ein Blatt unterzulegen. Mit einer derartigen Unterblattzuführung wird dafür gesorgt, dass die Produkte zumindest nicht mit ihrer gesamten Unterseite unmittelbar auf einer Auflagefläche, beispielsweise einer Fördereinrichtung, aufliegen. Wenn im Folgenden jeweils lediglich der Begriff "Interleaver" verwendet wird, dann gelten die jeweiligen Ausführungen und gilt die jeweilige Offenbarung - soweit sinnvoll - auch für einen "Underleaver". Wie bereits erwähnt, kann ein und dieselbe Vorrichtung zum Bereitstellen von Zwischenblattmaterial bzw. von Zwischenblättern in Abhängigkeit von der jeweiligen Anwendung sowohl eine Interleaver-Funktion als auch eine Underleaver-Funktion ausüben, d.h. ein Interleaver ist im Rahmen dieser Offenbarung gleichzeitig auch ein Underleaver, und umgekehrt.

Wenn das Zwischenblattmaterial am Schneidbereich für mehrere Spuren bereitgestellt werden soll, dann ist am Schneidbereich für jede Spur eine Materialbahn erforderlich. Es ist möglich, für mehrere Spuren einen gemeinsamen Materialvorrat vorzusehen. Um einzelne Materialbahnen zu erzeugen, kann eine Einrichtung zum Teilen der den jeweiligen Materialvorrat bildenden Materialbahn in die erforderliche Anzahl von einzelnen Materialbahnen vorgesehen sein. Dies ist grundsätzlich bekannt. Bei den Materialvorräten kann es sich insbesondere jeweils um eine drehbar gelagerte Materialrolle handeln.

Die Erfindung betrifft außerdem eine Vorrichtung zum mehrspurigen Aufschneiden von Lebensmittelprodukten mit einer Produktzufuhr, die mehrere aufzuschneidende Produkte gleichzeitig einem Schneidbereich zuführt, in welchem sich ein Schneidmesser rotierend und/oder umlaufend bewegt, um die zugeführten Produkte gleichzeitig in Scheiben zu schneiden, und mit einem erfindungsgemäßen Interleaver bzw. Underleaver.

Derartige Schneidevorrichtungen werden auch als Slicer oder Hochgeschwindigkeitsslicer bezeichnet, letzteres vor dem Hintergrund, dass mit derartigen Maschinen z.B. stangen- oder laibförmige Lebensmittelprodukte mit hohen Schneidgeschwindigkeiten von mehreren hundert bis einigen tausend Scheiben pro Minute aufgeschnitten werden können. In vielen Anwendungen werden aus den abgetrennten, auf eine z.B. von einem Portionierband gebildete Ablagefläche fallenden Scheiben beispielsweise gestapelte oder geschindelte Portionen gebildet. Ein Interleaver dient beispielsweise dazu, zwischen unmittelbar aufeinanderfolgende Scheiben einer Portion Zwischenblätter einzubringen, damit die Scheiben später leichter voneinander getrennt und/oder gegriffen werden können. Als Material für die Zwischenblätter dient beispielsweise Papier oder eine Kunststofffolie.

Entsprechend dem Fortschritt bei der Entwicklung von Schneidemaschinen, insbesondere hinsichtlich Geschwindigkeit, Genauigkeit und Vielseitigkeit, werden auch an die Inter- bzw. Underleaver immer höhere Anforderungen gestellt. Bekannte Inter- bzw. Underleaver-Konzepte, die grundsätzlich zufriedenstellende Ergebnisse liefern, genügen diesen erhöhten Anforderungen häufig nicht mehr.

Es besteht folglich Bedarf an einer verbesserten Interleaver- bzw. Underleaver-Technologie insbesondere auf dem Gebiet des Aufschneidens von Lebensmittelprodukten mittels Hochgeschwindigkeitsslicern. Besonders der mehrspurige und spurindividuelle Interleaver- bzw. Underleaver-Betrieb steht immer mehr im Vordergrund.

Ein Problem der bekannten mehrspurigen Inter- bzw. Underleaver besteht darin, dass häufig die einzelnen Materialvorräte unterschiedlich schnell aufgebraucht werden. Hieraus resultieren unterschiedliche Zeitpunkte zum Nachfüllen der Vorräte, z.B. durch Auswechseln der Materialrollen. So kann es passieren, dass in einer Spur eine Materialrolle ausgewechselt und dafür der Betrieb des Inter- bzw. Underleavers und folglich auch des Slicers unterbrochen werden muss, obwohl in den anderen Inter- bzw. Underleaver-Spuren weitergearbeitet werden könnte. Hierdurch entstehen Zeitverluste, die zu einer nachteiligen Reduzierung des Produktdurchsatzes des Slicers führen. Problematisch ist dies insbesondere dann, wenn eine Materialrolle gewechselt werden muss, die nicht unmittelbar zugänglich ist. Bei einem Inter- bzw. Underleaver mit mehr als zwei Materialrollen kann hier auch nicht dadurch Abhilfe geschaffen werden, dass eine Zugänglichkeit von zwei Seiten geschaffen wird, was in der Praxis aus anderen Gründen häufig ohnehin nicht durchführbar wäre.

Aufgabe der Erfindung ist es daher, das mehrspurige Bereitstellen von bahnförmigem Zwischenblattmaterial dahingehend zu verbessern, dass Betriebsunterbrechungen des Interleavers bzw. Underleavers aufgrund des Auffüllens der Materialvorräte minimiert werden.

Die Lösung dieser Aufgabe erfolgt durch die Merkmale der unabhängigen Ansprüche.

Bei dem erfindungsgemäßen Verfahren ist vorgesehen, dass während des Betriebs der Materialverbrauch zumindest eines Materialvorrats, insbesondere in Abhängigkeit von den Restmengen in den Materialvorräten bzw. von den bereits verbrauchten Mengen, beeinflusst wird, indem zumindest für diesen Materialvorrat in der oder den betreffenden Spuren die Länge der Zwischenblätter gegenüber der Normallänge verändert wird.

Durch die Erfindung wird der Materialverbrauch in der betreffenden Spur gewissermaßen "künstlich" erhöht oder verringert, um so z.B. über einen bestimmten Zeitraum oder im Hinblick auf einen bestimmten zukünftigen Zeitpunkt den Materialverbrauch der Spuren untereinander anzugleichen. Hierdurch kann erreicht werden, dass sich für alle Materialvorräte ein Verbrauchszustand ergibt, für den ein gleichzeitiges Auffüllen aller Materialvorräte sinnvoll ist. Zum Auffüllen aller Materialvorräte ist folglich nur eine einzige Betriebsunterbrechung des Inter- bzw. Underleavers und somit des Schneideprozesses insgesamt erforderlich.

Die Erfindung nutzt den Umstand aus, dass im Hinblick auf den Zweck der Zwischenblätter sowie im Hinblick auf die Akzeptanz der Anordnung aus Scheiben und Zwischenblättern beim Kunden geringfügige Abweichung von der Normallänge einerseits - insbesondere da sie kaum sichtbar bzw. feststellbar sind - unproblematisch sind und andererseits sich aufgrund der großen Anzahl von in der Praxis mit einem Materialvorrat erzielbaren Zwischenblättern zu einer relevanten Erhöhung bzw. Verringerung des Materialverbrauchs in der betreffenden Spur addieren.

Es kann ausreichen, den Materialverbrauch lediglich in einer der Spuren in der erfindungsgemäßen Weise zu beeinflussen. Alternativ kann vorgesehen sein, dass während des Betriebs für jede Spur eine erfindungsgemäße Verbrauchsbeeinflussung durchgeführt wird.

Bei der erfindungsgemäßen Vorrichtung zum mehrspurigen Bereitstellen von bahnförmigem Zwischenblattmaterial sind zumindest zwei Materialvorräte vorgesehen, insbesondere drehbar gelagerte Materialrollen, wobei die Materialvorräte jeweils einer oder mehreren Spuren zugeordnet sind und von den Materialvorräten die einzelnen Materialbahnen abnehmbar sind. Ferner ist während des Betriebs durch eine interne oder externe Steuereinrichtung der Materialverbrauch zumindest eines Materialvorrats, insbesondere in Abhängigkeit von den Restmengen in den Materialvorräten bzw. von den bereits verbrauchten Mengen, beeinflussbar, indem zumindest für diesen Materialvorrat in der oder den betreffenden Spuren die Länge der Zwischenblätter gegenüber der Normallänge veränderbar ist.

Bevorzugte Ausgestaltungen der Erfindung sind auch in den abhängigen Ansprüchen, der Beschreibung sowie der Zeichnung angegeben.

Gemäß einem Ausführungsbeispiel wird die Länge der Zwischenblätter dadurch verändert, dass die Zeitspanne geändert wird, während welcher die betreffende Materialbahn in den Schneidbereich ausgestoßen wird, und/oder die Geschwindigkeit geändert wird, mit welcher die betreffende Materialbahn in den Schneidbereich ausgestoßen wird. Die Ausstoßzeitspanne kann durch Ändern des Startzeitpunktes und/oder des Endzeitpunktes für das insbesondere mit konstanter Ausstoßgeschwindigkeit erfolgende Ausstoßen der Materialbahn gegenüber einer der Normallänge entsprechenden Zeitspanne verkürzt oder verlängert werden. Folglich kann die Ausstoßzeitdauer einfach durch eine entsprechend lange Einschaltzeit einer das Ausstoßen der Materialbahn in den Schneidbereich bewirkenden Ausgabeeinrichtung vorgegeben werden.

Insbesondere dann, wenn die Zwischenblätter im Schneidbereich mittels des auch die Produktscheiben abtrennenden Schneidmessers abgetrennt werden, ergibt sich bei dieser Vorgehensweise eine Situation, bei der sich die Veränderung der Länge der Zwischenblätter nur am freien, in Ausstoßrichtung vorderen Ende der Materialbahn auswirkt. Am hinteren Ende der Zwischenblätter ergeben sich daher keine Änderungen gegenüber einer Situation, in der alle Zwischenblätter die gleiche Normallänge aufweisen. Mit anderen Worten sind bei dieser Vorgehensweise die Zwischenblätter an ihrem in Ausstoßrichtung hinteren Ende miteinander ausgerichtet. In einer Portion aus exakt übereinanderliegenden Scheiben ragen folglich alle Zwischenblätter gleich weit aus der Portion nach hinten heraus. Hierdurch ist sichergestellt, dass der Benutzer zumindest an dieser Portionsseite ein nicht nur optisch ansprechendes Erscheinungsbild vorfindet, sondern außerdem der Zweck der Zwischenblätter, nämlich sicherzustellen, dass die Produktscheiben vom Verbraucher leicht voneinander getrennt und gegriffen werden können, gewährleistet ist.

Gemäß einem weiteren Ausführungsbeispiel wird die Länge der Zwischenblätter dahingehend verändert, dass die Restmengen in den Materialvorräten zumindest ungefähr gleich groß sind, und zwar entweder zu jedem Zeitpunkt oder spätestens dann, wenn eine Zusatzbedingung erfüllt ist.

Die Zusatzbedingung kann beispielsweise darin bestehen, dass die Materialvorräte zumindest weitgehend aufgebraucht sind, dass ein vorgegebener oder vorgebbarer Wert für die Restmengen erreicht ist, oder eine bestimmte, insbesondere absehbare Situation den Schneidbetrieb betreffend vorliegt. So kann beispielsweise ein Zustand mit zumindest ungefähr gleich großen Restmengen in den Materialvorräten zu einem Zeitpunkt hin angestrebt werden, für den das Ende einer Charge von aufzuschneidenden Produkten erwartet wird.

Des Weiteren kann erfindungsgemäß vorgesehen sein, dass die Länge der Zwischenblätter derart verändert wird, dass die Restmengen in den Materialvorräten zu einer gleichen Größe tendieren.

Des Weiteren kann erfindungsgemäß vorgesehen sein, dass die Länge der Zwischenblätter zeitlich variiert wird. In einer jeweiligen Spur muss folglich die Abweichung der Länge der Zwischenblätter von der Normallänge nicht zeitlich konstant sein. Die Erfindung ist folglich nicht darauf beschränkt, für einen bestimmten Betriebszeitraum lediglich eine konstante Längenabweichung für eine Spur vorzugeben. Vielmehr kann für jede Spur die Längenabweichung eine zeitlich veränderliche Größe sein, die zu jedem Zeitpunkt derart gewählt wird, dass das jeweils angestrebte Ziel sicher und zuverlässig erreicht werden kann.

Die Möglichkeit, die Länge der Zwischenblätter zeitlich zu variieren, schließt nicht aus, dass zumindest einige unmittelbar aufeinanderfolgende Zwischenblätter jeweils die gleiche von der Normallänge abweichende Länge aufweisen. So kann gemäß einer Ausführungsform der Erfindung beispielsweise vorgesehen sein, dass die Länge der Zwischenblätter derart verändert wird, dass jeweils innerhalb einer mehrere Scheiben mit Zwischenblättern umfassenden Portion die Zwischenblätter die gleiche Länge aufweisen. Mit anderen Worten wird hier die Länge der Zwischenblätter nicht innerhalb einer Portion beispielsweise scheibenweise verändert, sondern eine Veränderung der Länge der Zwischenblätter erfolgt jeweils portionsweise, wobei entweder nach Fertigstellung jeder Portion eine Längenänderung vorgenommen wird oder die Länge über mehrere Portionen konstant bleibt.

Eine innerhalb einer Portion konstante Länge der Zwischenblätter gewährleistet ein optisch ansprechendes Erscheinungsbild der Portion.

Grundsätzlich ist es erfindungsgemäß möglich, die Länge der Zwischenblätter gegenüber der Normallänge entweder zu vergrößern oder zu verkleinern, d.h. den Materialverbrauch in der jeweiligen Spur sozusagen "künstlich" zu erhöhen bzw. zu reduzieren. Gemäß einer bevorzugten Ausführungsform ist jedoch vorgesehen, dass der Materialverbrauch ausschließlich durch Reduzieren der Normallänge beeinflusst wird. Dies ist insbesondere dann der Fall, wenn die Portionen in Verpackungsmulden abgelegt werden, die mit ihrer maximalen Ausdehnung die maximale Größe der Portionen bestimmen. In diesem Fall könnte eine Vergrößerung der Normallänge dazu führen, dass die Portionen nicht mehr in die vorgesehenen Verpackungsmulden passen. Ist beispielsweise der Materialverbrauch in einer ersten Spur gegenüber einer zweiten Spur zu niedrig, wird hierbei nicht etwa der Materialverbrauch in der ersten Spur durch Erhöhen der Normallänge vergrößert, sondern in der zweiten Spur durch Reduzieren der Normallänge verkleinert.

Wenn davon abgesehen wird, die Normallänge zu vergrößern, ist sichergestellt, dass die Zwischenblätter nicht zu weit aus der jeweiligen Portion hinaus vorstehen, was anderenfalls das Erscheinungsbild der Portion beeinträchtigen und auch das Einlegen der betreffenden Portion in eine Verpackung erschweren könnte.

Alternativ ist es möglich, den Materialverbrauch durch Erhöhen der Normallänge zu beeinflussen, und zwar entweder ausschließlich oder zusätzlich zu einem Reduzieren der Normallänge für wenigstens einen der anderen Materialvorräte.

Gemäß einem weiteren Ausführungsbeispiel der Erfindung kann vorgesehen sein, dass die Länge der Zwischenblätter derart reduziert wird, dass das vordere Ende zumindest eines oder einiger Zwischenblätter zwischen den jeweils unmittelbar angrenzenden Scheiben liegt. An der entsprechenden Seite einer mehrere Scheiben mit Zwischenblättern umfassenden Portion ragen derartige Zwischenblätter nicht aus der Portion heraus. Dies muss nicht von Nachteil und kann sogar vorteilhaft sein, wenn es erwünscht ist, die Sichtbarkeit der Zwischenblätter so gering wie möglich zu halten. Insbesondere dann, wenn - wie vorstehend bereits erwähnt - die Zwischenblätter im Schneidbereich mittels des Schneidmessers abgetrennt werden, das auch die jeweilige Scheibe vom Produkt abtrennt, ist nämlich bereits an der hinteren Seite der jeweiligen Portion sozusagen automatisch sichergestellt, dass die Zwischenblätter aus der Portion herausragen und ihren Zweck erfüllen können, ein leichtes Trennen und Greifen aufeinanderfolgender Produktscheiben zu ermöglichen.

In Abhängigkeit von den Eigenschaften der jeweiligen Produktscheiben kann es für den Verbraucher möglich sein, die Scheiben auch ohne in Längsrichtung vorstehende Zwischenblätter voneinander zu trennen und zu greifen, d.h. es kann für die Trennbarkeit der Scheiben genügen, wenn sich die Zwischenblätter in Längsrichtung gesehen jeweils vollständig zwischen den Scheiben befinden. Ein Überstand der Zwischenblätter in Längsrichtung ist auch dann nicht erforderlich, wenn die Materialbahnen jeweils breiter als die Scheiben sind und dadurch ein seitlicher Überstand der Zwischenblätter vorhanden ist, der ein Trennen und Greifen der Scheiben für den Verbraucher ermöglicht. Auf die Eigenschaften der Produktscheiben kommt es hierbei nicht an.

Als Basis für eine Beeinflussung des Materialverbrauchs kann beispielsweise eine Berechnung des bisherigen Materialverbrauchs zumindest eines Materialvorrats dienen. Diese Berechnung kann beispielsweise auf Daten einer oder mehrerer Komponenten, z.B. des Antrieb oder der Antriebe, einer Abnahmeeinrichtung dienen, mittels welcher die Materialbahn von dem betreffenden Materialvorrat abgenommen wird.

Des Weiteren kann erfindungsgemäß vorgesehen sein, dass mittels einer Messeinrichtung Restmengen in den Materialvorräten bestimmt und an eine Steuereinrichtung kommuniziert werden. Bei der Steuereinrichtung kann es sich um eine in den Inter- bzw. Underleaver integrierte Steuereinrichtung handeln, die mit einer übergeordneten, insbesondere zu einem Slicer gehörenden Steuereinrichtung kommunizieren kann. Alternativ kann der Interleaver bzw. Underleaver dazu ausgebildet sein, die Daten der Messeinrichtung einer übergeordneten oder gemeinsamen Steuereinrichtung des Slicers zur Verfügung zu stellen, wobei diese Steuereinrichtung dann das Aufschneiden der Produkte und das Bereitstellen des Zwischenblattmaterials spurindividuell koordiniert, einschließlich der erfindungsgemäßen Beeinflussung des Materialverbrauchs in zumindest einer der Spuren. Alternativ kann vorgesehen sein, dass als ein Maß für Restmengen in den Materialvorräten beispielsweise jeweils der Durchmesser einer den Materialvorrat bildenden Materialrolle bestimmt wird. Alternativ oder zusätzlich kann als ein Maß für Restmengen in den Materialvorräten jeweils das Gewicht des Materialvorrats bestimmt werden. Eine weitere Möglichkeit, ein Maß für Restmengen in den Materialvorräten zu bestimmen, besteht darin, jeweils die Länge der Materialbahn zu messen, die durch eine dem Materialvorrat nachgeordnete Messstelle gelaufen ist. Des Weiteren kann alternativ oder zusätzlich vorgesehen sein, dass als ein Maß für Restmengen in den Materialvorräten jeweils ein Parameter einer die Materialbahn von dem Materialvorrat abnehmenden Abnahmeeinrichtung gemessen wird. Bei dem Parameter kann es sich beispielsweise um die Anzahl von Umdrehungen zumindest einer Komponente der Abnahmeeinrichtung, letztlich also um das Ergebnis eine Wegmessung, oder um die Stromaufnahme der Abnahmeeinrichtung handeln. Auch eine andere Art der Wegmessung kann den Parameter liefern.

Gemäß einem weiteren Ausführungsbeispiel der Erfindung werden zumindest einige jeweils mehrere Scheiben mit Zwischenblättern umfassende Portionen daraufhin überprüft, ob die Längenänderungen der Zwischenblätter innerhalb vorgebbarer oder vorgegebener Grenzen liegen. Die Ergebnisse derartiger Überprüfungen können beispielsweise in eine Regelung einfließen, um sicherzustellen, dass eine zu starke Längenänderung der Zwischenblätter unterbleibt.

Bei der erfindungsgemäßen Vorrichtung kann vorgesehen sein, dass zum Ausstoßen der Materialbahnen in den Schneidbereich eine mehrspurige Ausgabeeinrichtung vorgesehen ist, die für jede Spur eine angetriebene Vorschubwalze umfasst, welche zusammen mit einer Gegeneinheit einem Vorschubspalt für die Materialbahn bildet, und die durch spurindividuelles Betreiben der einzelnen Vorschubwalzen mittels der Steuereinrichtung steuerbar ist.

Eine solche Ausgabeeinrichtung ermöglicht einen spurindividuellen Inter- bzw. Underleaver-Betrieb und ist somit in vorteilhafter Weise dazu geeignet, den Materialverbrauch in den einzelnen Spuren z.B. dadurch zu beeinflussen, dass die Zeitspanne geändert wird, während welcher die betreffende Materialbahn in den Schneidbereich ausgestoßen wird, und/oder dass die Geschwindigkeit geändert wird, mit welcher die betreffende Materialbahn in den Schneidbereich ausgestoßen wird.

Gemäß einem bevorzugten Ausführungsbeispiel ist die Steuereinrichtung zur Ausführung einer Regelung ausgebildet, bei der eine direkt oder indirekt von Restmengen in den Materialvorräten abhängige Regelgröße als Ist-Wert bestimmt und bei einer Abweichung des Ist-Wertes von einem vorgebbaren oder vorgegebenen Sollwert die Länge der Zwischenblätter für einen oder mehrere Materialvorräte derart geändert wird, dass sich der Ist-Wert dem Soll-Wert annähert.

Dabei kann vorgesehen sein, dass die Regelgröße auf allen Differenzen jeweils zweier Restmengen basiert und als Sollwert vorgegeben oder vorgebbar ist, dass alle Differenzen innerhalb vorgebbarer oder vorgegebener Toleranzen Null sind.

Vorzugsweise ist eine Messeinrichtung vorgesehen, die dazu ausgebildet ist, Restmengen in den Materialvorräten oder die jeweils bereits verbrauchten Materialmengen zu bestimmen und an die Steuereinrichtung zu kommunizieren. Hinsichtlich möglicher Messgrößen zur Bestimmung von Restmengen in den Materialvorräten oder von bereits verbrauchten Materialmengen wird auch auf die vorstehenden Ausführungen zum erfindungsgemäßen Verfahren verwiesen.

Ferner kann eine Erfassungseinrichtung vorgesehen sein, die dazu ausgebildet ist, zumindest einige jeweils mehrere Scheiben mit Zwischenblättern umfassende Portionen zu erfassen und daraufhin zu überprüfen, ob die Längenänderungen der Zwischenblätter innerhalb vorgebbarer oder vorgegebener Grenzen liegen. Dies kann beispielsweise mittels einer Kamera erfolgen.

Generell kann die erfindungsgemäße Vorrichtung dazu ausgebildet sein, nach einem erfindungsgemäßen Verfahren betrieben zu werden.

Die Erfindung wird im Folgenden beispielhaft unter Bezugnahme auf die Zeichnung beschrieben. Es zeigen:
- Fig. 1: schematisch eine Seitenansicht eines Slicers mit einem Interleaver gemäß einem Ausführungsbeispiel der Erfindung sowie drei schematisierte Einzeldarstellungen,
- Fig. 2 - 4: jeweils schematisch eine Ausführungsform einer Vorschubeinheit eines Interleavers, und
- Fig. 5 und 6: jeweils schematisch mehrere Portionen jeweils aus mehreren abgetrennten Produktscheiben und Zwischenblättern zur Veranschaulichung der Wirkung der Erfindung.

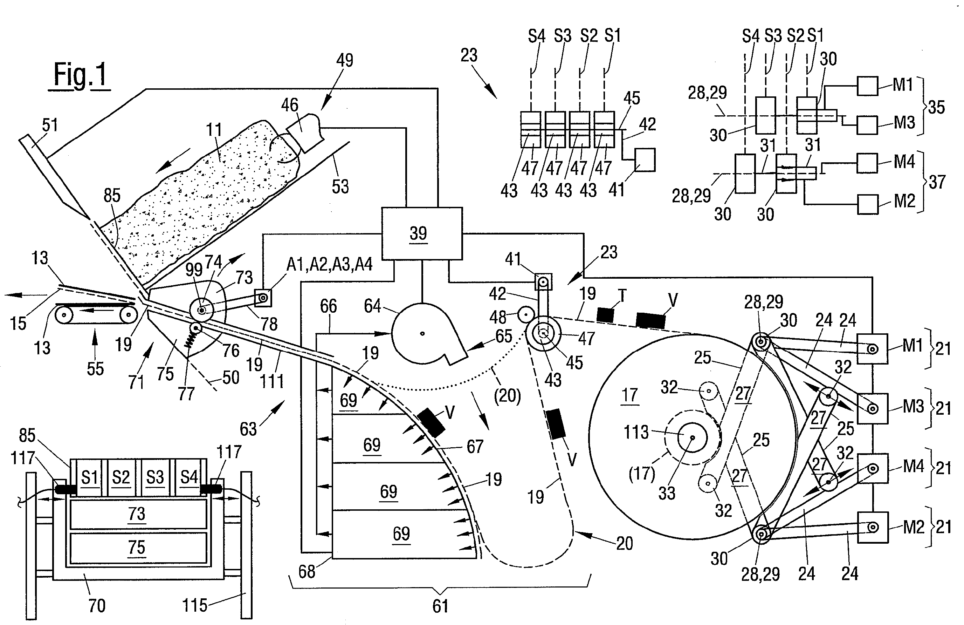

Die große Darstellung in Fig. 1 zeigt in einer schematischen, nicht maßstabsgerechten Seitenansicht einen mehrspurigen Hochgeschwindigkeitsslicer, also eine Vorrichtung zum mehrspurigen Aufschneiden von Lebensmittelprodukten wie beispielsweise Wurst, Fleisch oder Käse.

In dem dargestellten Ausführungsbeispiel wird der Slicer vierspurig betrieben. Auf einer zur Horizontalen geneigten Produktauflage 53 liegen vier aufzuschneidende Produkte 11 nebeneinander. Eine Produktzufuhr 49 umfasst für jede Spur, also für jedes der vier Produkte 11, einen auch als Produktgreifer bezeichneten Produkthalter 46, der das Produkt 11 am hinteren Ende hält und in der durch den Pfeil angedeuteten Zufuhrrichtung einer senkrecht zur Produktauflage 53 verlaufenden Schneidebene 50 zuführt, in der sich ein Schneidmesser 51 bewegt, durch dessen Schneidkante die Schneidebene 50 definiert ist.

Bei dem Schneidmesser 51 kann es sich um ein sogenanntes Sichel- oder Spiralmesser mit einer sichel- oder spiralförmig verlaufenden Schneidkante handeln, welches lediglich um eine nicht dargestellte Messerachse rotiert. Alternativ kann das Schneidmesser 51 ein sogenanntes Kreismesser mit einer kreisförmigen Schneidkante sein, das um eine eigene Messerachse rotiert und zusätzlich um eine parallel versetzt zur Messerachse verlaufende Achse planetarisch umläuft, um die zum Abtrennen von Scheiben 13 von den Produkten 11 erforderliche Schneidbewegung relativ zu den Produkten 11 zu erzeugen.

Die Produktzufuhr 49 ist spurindividuell betreibbar, d.h. die Produkthalter 46 können sich grundsätzlich unabhängig voneinander in der Zufuhrrichtung bewegen und somit die einzelnen Produkte 11 mit unterschiedlichen Geschwindigkeiten und Geschwindigkeitsprofilen der Schneidebene 50 zuführen. Dies gilt auch, wenn als Produktzufuhr 49 anstelle der Produkthalter 46 oder zusätzlich zu den Produkthaltern 46 spurindividuell antreibbare Produktauflagebänder anstelle einer passiven Produktauflage 53 verwendet werden. Hierdurch kann in jeder Spur unabhängig von den jeweils anderen Spuren der Aufschneidevorgang individuell gesteuert werden, insbesondere mit dem Ziel einer gewichtsgenauen Erzeugung von Scheiben 13 bzw. von jeweils aus mehreren Scheiben 13 gebildeten Portionen unter Berücksichtigung der individuellen Produkteigenschaften wie insbesondere Gewichtsverteilung und Querschnittsprofil.

Es ist auch möglich, in einer Spur den Produkthalter 46 anzuhalten oder entgegen der Zufuhrrichtung zu bewegen, um vorübergehend keine Scheiben 13 von dem betreffenden Produkt 11 abzutrennen, während die Produkte 11 in den anderen Spuren weiterhin aufgeschnitten werden. Die spurindividuelle Produktzufuhr 49 kann auch die Schneidbewegung des Schneidmessers 51 berücksichtigen, die sich dadurch auszeichnet, dass pro Schneidbewegung - also pro Umlauf bzw. Rotation des Schneidmessers 51 - zwar von allen Produkten 11 jeweils eine Scheibe 13 abgetrennt wird, dies jedoch nicht exakt zeitgleich erfolgt, sondern aufgrund des eine bestimmte Zeitdauer benötigenden Durchgangs des Schneidmessers 51 durch die Produkte 11 die abgetrennten Scheiben 13 der Produkte 11 zeitlich nacheinander auf die hier von einem sogenannten Portionierband 55 gebildete Ablagefläche fallen.

Für viele Produkte 11, beispielsweise Schinken oder manche Käsesorten, ist es erwünscht, wenn die jeweils aufeinanderliegenden, beispielsweise eine stapelförmige oder geschindelte Portion bildenden Scheiben 13 voneinander getrennt sind, damit sie später vom Verbraucher leichter einzeln aus einer die Portion enthaltenden Verpackung entnommen werden können. Hierzu dienen auf dem Gebiet der Hochgeschwindigkeitsslicer sogenannte Interleaver, also Vorrichtungen zum Bereitstellen von bahnförmigem Zwischenblattmaterial, mit denen es möglich ist, zwischen unmittelbar aufeinanderfolgende Scheiben 13 Zwischenblätter 15 einzubringen.

Interleaver gibt es in unterschiedlichen Ausgestaltungen. Gemäß einer verbreiteten Funktionsweise, die auch für den hier dargestellten erfindungsgemäßen Interleaver vorgesehen ist, werden die endlosen Materialbahnen 19 im Bereich der Schneidebene 50 von unten kommend entsprechend der durch die Schneidbewegung des Schneidmessers 51 vorgegebenen Taktung ausgestoßen. Dies erfolgt derart, dass das vordere Ende der betreffenden Materialbahn 19 vor der Schnittfläche des betreffenden Produktes 11 liegt und zusammen mit der als nächstes abgetrennten Scheibe 13 von der Materialbahn 19 mittels des Schneidmessers 51 abgeschnitten wird und so ein Zwischenblatt 15 bildet. Dieses Zwischenblatt kommt auf dem Portionierband 55 bzw. der zuvor abgetrennten Scheibe 13 und unterhalb derjenigen Scheibe 13 zu liegen, mit der zusammen das Zwischenblatt 15 zuvor abgetrennt wurde.

Der Aufbau und die Funktionsweise derartiger Slicer und auch das Grundprinzip eines Interleavers sind dem Fachmann hinlänglich bekannt, so dass hierauf im Folgenden nicht näher eingegangen zu werden braucht.

Der in den Slicer integrierte erfindungsgemäße Interleaver ist mehrspurig und zu einem durchgehend spurindividuellen Bereitstellen des Zwischenblattmaterials ausgebildet. Nachfolgend werden Aufbau und Funktionsweise des Interleavers am Beispiel eines Vierspurbetriebs erläutert. Durch eine vergleichsweise einfache Umrüstung kann der erfindungsgemäße Interleaver aber auch einspurig, zweispurig oder dreispurig betrieben werden. Die jeweilige Betriebsart ist beispielsweise von den aufzuschneidenden Produkten, den nachgeschalteten Förder- und Sortiereinrichtungen sowie der Verpackungsart bzw. der Verpackungsmaschine abhängig. Generell ist der erfindungsgemäße Interleaver derart konzipiert, dass ein Betrieb mit beliebig vielen Spuren und folglich auch mit mehr als vier Spuren möglich ist.

Für jede der vier Spuren S1, S2, S3 und S4 umfasst das Bereitstellen des Zwischenblattmaterials das Abnehmen des Materials von einem durch eine Materialrolle 17 gebildeten Materialvorrat, das Speichern von Material in einem Schlaufenspeicher 61, das Führen des Materials in einem Bereich zwischen dem Schlaufenspeicher 61 und einer Ausgabeeinrichtung 71 sowie das Ausgeben des Materials mittels der Ausgabeeinrichtung 71.

Für jede Spur umfasst das Abnehmen der Materialbahn 19 von der Materialrolle 17 das Abrollen der Materialbahn 19 mittels eines Abrollantriebs 21 und das Fördern der Materialbahn 19 in den Schlaufenspeicher 61 hinein mittels einer für alle Spuren gemeinsamen Fördereinrichtung 23. Die einzelnen Abrollantriebe 21 und die gemeinsame Fördereinrichtung 23 bilden eine Abnahmeeinrichtung des erfindungsgemäßen Interleavers.

Für jede Spur erfolgt das Speichern der Materialbahn 19 durch die Bildung einer Materialschlaufe 20 im Schlaufenspeicher 61. Im Schlaufenspeicher 61 werden die einzelnen Materialbahnen 19 bzw. Schlaufen 20 durch Trennwände (nicht dargestellt) seitlich geführt, um die Spurtreue der Materialbahnen 19 zu gewährleisten.

Im dargestellten Ausführungsbeispiel wird die gesamte Transportstrecke für die Materialbahn 19 zwischen dem Schlaufenspeicher 61 und der Ausgabeeinrichtung 71 von einem Schacht 111 gebildet, in welchem die einzelnen Materialbahnen 19 geführt werden. Eine solche Ausgestaltung ist in der Praxis zwar möglich. Bevorzugt sind jedoch zwischen dem Schlaufenspeicher 61 und der Ausgabeeinrichtung 71 zusätzlich zu einem reinen Führungsabschnitt, wie er in Fig. 1 durch den Schacht 111 gebildet ist, weitere Einrichtungen vorgesehen, auf die an dieser Stelle nicht näher eingegangen werden soll.

Das Ausgeben der einzelnen Materialbahnen 19 umfasst jeweils das Entnehmen der Materialbahn 19 aus dem Schlaufenspeicher 61 und das Ausstoßen der Materialbahn 19 in den Schneidbereich, also vor die Schnittfläche des betreffenden Produktes 11, wie vorstehend erläutert. Beim Entnehmen wird die Materialbahn 19 aus dem Schlaufenspeicher 61 gezogen. Gleichzeitig wird dabei die Materialbahn 19 in den Schneidbereich vorgeschoben und damit ausgestoßen.

Diese einzelnen Bereiche des erfindungsgemäßen Interleavers, also die Abnahmeeinrichtung mit den einzelnen Abrollantrieben 21 und der gemeinsamen Fördereinrichtung 23, der Schlaufenspeicher 61 sowie die Ausgabeeinrichtung 71 werden im Folgenden näher beschrieben. Sofern nichts anderes erwähnt ist, gilt die jeweilige Beschreibung von Funktion und Aufbau für jede der einzelnen Spuren.

Das Zusammenspiel dieser einzelnen Funktionseinheiten des Interleavers untereinander und auch das Zusammenspiel des Interleavers mit den Funktionseinheiten des Slicers, insbesondere - aber nicht ausschließlich - dem Schneidmesser 51 und der Produktzufuhr 49, wird durch eine Steuereinrichtung 39 gesteuert, bei der es sich um die zentrale Steuereinrichtung des Slicers und somit um eine bezüglich des Interleavers externe Steuereinrichtung handeln kann. Alternativ kann der Interleaver eine interne Steuereinrichtung aufweisen, die mit einer Steuereinrichtung des Slicers zusammenarbeitet.

Des Weiteren kann der Interleaver zusätzlich externe Signale erhalten, z.B. von einem Kamerasystem, welches die mittels des Slicers erzeugten Portionen bzw. die Portionsbildung aus den abgetrennten Scheiben überwacht,

Die Materialrollen 17 der einzelnen Spuren sind um eine von einem gemeinsamen Dorn definierte gemeinsame Drehachse 33 drehbar gelagert. Jede Materialrolle 17 umfasst einen Rollenkern 113, auf dem die Materialbahn 19 aufgewickelt ist. Die Materialrollen 17 sind auf dem Dorn insofern frei drehbar, als der Drehantrieb für die Materialrollen 17 zum Abrollen der Materialbahnen 19 nicht über diesen gemeinsamen Dorn erfolgt.

Stattdessen ist für jede Materialrolle 17 ein eigener Abrollantrieb 21 vorgesehen. Jeder Abrollantrieb 21 umfasst einen um eine Schwenkachse 28 verschwenkbaren Antriebsarm 27. Jeder Antriebsarm 27 umfasst einen nicht dargestellten Träger, an dessen einem Ende eine Antriebsrolle 30 und an dessen anderem Ende eine Umlenkrolle 32 angebracht ist. Als Antriebsorgan für die Materialrolle 17 dient ein um die Antriebsrolle 30 und die Umlenkrolle 32 umlaufendes Endlosband 25, das als Reibband ausgebildet ist und dazu dient, über das der Materialrolle 17 zugewandete Trum kraftschlüssig mit der aufgewickelten Materialbahn 19 der Materialrolle 17 zusammenzuwirken.

Wie auch in der schematisierten Darstellung oben rechts in Fig. 1 gezeigt, ist jede Antriebsrolle 30 drehfest mit einer Antriebswelle 31 verbunden, die mittels eines Antriebsmotors M über einen Antriebsriemen 24 in Drehung versetzt werden kann, um das Reibband 25 anzutreiben und auf diese Weise die Materialbahn 19 von der Materialrolle 17 abzurollen.

Da die vier Spuren S1, S2, S3 und S4 des Interleavers parallel verlaufen und somit auch vier Materialrollen 17 nebeneinander auf dem gemeinsamen Dorn sitzen, sind die vier Antriebsarme 27 entsprechend in Querrichtung versetzt zueinander angeordnet. Dies ist in der schematisierten Darstellung oben rechts in Fig. 1 durch die Zuordnung der Spuren S1 bis S4 zu den einzelnen Antriebsrollen 30 der Antriebsarme 27 angedeutet.

Besonders vorteilhaft sind die räumliche Anordnung der Antriebsarme 27 sowie die Art und Weise des Drehantriebs für die Antriebsrollen 30. Die Drehachsen 29 der Antriebswellen 31 und somit der Antriebsrollen 30 fallen jeweils mit der Schwenkachse 28 des betreffenden Antriebsarmes 27 zusammen. Dabei ist nicht für alle Antriebsarme 27 eine einzige gemeinsame Schwenkachse 28 vorgesehen. Stattdessen sind die Antriebsarme 27 paarweise zusammengefasst, wobei für jedes Paar eine gemeinsame Schwenkachse 28 vorgesehen ist. Dabei sind den Spuren S1 und S3 zwei um eine obere Schwenkachse 28 verschwenkbare Antriebsarme 27 zugeordnet, während den Spuren S2 und S4 zwei Antriebsarme 27 zugeordnet sind, die um eine untere Schwenkachse 28 verschwenkbar sind.

In dem dargestellten Ausführungsbeispiel besitzen alle Antriebsarme 27 die gleiche Länge und liegen die obere Schwenkachse 28 und die untere Schwenkachse 28 auf einem Kreiszylinder um die gemeinsame Drehachse 33 der Materialrollen 17. Alternativ können die Antriebsarme 27 unterschiedlich lang und die Schwenkachsen 28 anders angeordnet sein.

Sowohl für das obere Paar von Antriebsarmen 27 als auch für das untere Paar von Antriebsarmen 27 ist jeweils ein Koaxialwellenantrieb 35 bzw. 37 vorgesehen. Die beiden Antriebsmotoren M1 und M3 gehören zu dem oberen Koaxialwellenantrieb 35, während der untere Koaxialwellenantrieb 37 die beiden Antriebsmotoren M4 und M2 umfasst. Ein Motor M3 bzw. M4 ist jeweils mit einer inneren Antriebswelle 31 für die axial weiter entfernt gelegene Antriebsrolle 30 verbunden, während der jeweils andere Motor M1 bzw. M2 mit einer die innere Antriebswelle 31 umgebenden Hohlwelle 31 verbunden ist, auf der die näher gelegene Antriebsrolle 30 sitzt.

Wie bereits erwähnt, sind die Antriebsmotoren M1 bis M4 nicht direkt mit den Antriebswellen 31 verbunden, sondern über Antriebsriemen 24. Dies ermöglicht eine versetzte oder abgesetzte Positionierung der Motoren und folglich eine optimale Nutzung des im Interleaver zur Verfügung stehenden Raumes. Darüber hinaus kann hierdurch der Interleaver vergleichsweise schmal gebaut werden, da die Motoren M1 bis M4 jeweils nicht in axialer Verlängerung der Antriebswellen 31 positioniert zu werden brauchen.

Ein weiterer Vorteil dieses Antriebskonzepts besteht darin, dass alle Motoren M1 bis M4 einschließlich der Antriebsriemen 24 nur auf einer Seite des Interleavers angeordnet sind. Über die andere Seite des Interleavers ist dieser Bereich daher besser zugänglich. Besonders vorteilhaft ist, dass alle Antriebsrollen 30 und somit Antriebsarme 27 von der gleichen Seite aus - nämlich ausgehend von der "bevorzugten" Bedienseite - auf die jeweilige Antriebswelle 31 aufgesteckt und von dieser abgenommen werden können. Dies erleichtert nicht nur die Reinigung und die Wartung, sondern ermöglicht auch einen einfachen und schnellen Umbau beispielsweise dann, wenn auf einen Slicer- und Interleaverbetrieb mit einer anderen Spuranzahl umgestellt werden soll.

Diese Vorteile gelten auch für die Anordnung der Materialrollen 17, die alle von derselben Seite aus - und zwar von der gleichen Seite wie die Abrollantriebe 21 - auf den gemeinsamen Dorn aufgesteckt und von diesem abgenommen werden können. Es genügt daher, wenn die Funktionsbereiche des Interleavers nur von einer Seite aus zugänglich sind.

Für jeden Antriebsarm 27 ist zudem ein nicht dargestellter Schwenkantrieb vorgesehen. Der Schwenkantrieb kann beispielsweise eine Kolben/Zylinder-Anordnung umfassen. Hierdurch können die Antriebsarme 27 jeweils in einen passiven Zustand geschwenkt werden, in welchem das Reibband 25 außer Reibeingriff mit der Materialrolle 17 ist. Bei diesem passiven Zustand kann es sich beispielsweise um eine Parkposition handeln, in welche die Antriebsarme 27 geschwenkt werden, wenn neue Materialrollen 17 eingesetzt werden sollen.

Dass erfindungsgemäß die Abrollantriebe 21 jeweils mit ihrem Reibband 25 kraftschlüssig am äußeren Umfang der Materialrolle 17 angreifen, um die Materialbahn 19 abzurollen, hat den Vorteil, dass die Abrollrate, d.h. die pro Zeiteinheit abgerollte Bahnlänge, unabhängig von dem momentanen Durchmesser der Materialrolle 17 und somit deren Aufbrauchgrad ist. Die vorstehend erwähnten Schwenkantriebe (nicht dargestellt) können jeweils den Antriebsarm 27 in Richtung der Drehachse 33 der Materialrolle 17 mit einer vorgegebenen Kraft bzw. einem vorgegebenen Drehmoment vorspannen, so dass der Antriebsarm 27 dem während des Betriebs abnehmenden Durchmesser der Materialrolle 17 nachgeführt wird und der Reibeingriff zwischen dem Reibband 25 und der aufgewickelten Materialbahn 19 stets gleich groß ist.

Mit einem gestrichelten Kreis ist eine nahezu aufgebrauchte Materialrolle 17 dargestellt, deren Durchmesser nur wenig größer als der Durchmesser des Rollenkerns 113 ist. Ein oberer Antriebsarm 27 sowie ein unterer Antriebsarm 27 sind zur Veranschaulichung eines entsprechend weit in Richtung der Drehachse 33 der Materialrollen 17 geschwenkten Zustands gestrichelt dargestellt.

Der Betrieb der Abrollantriebe 21 richtet sich nach Anforderungen von der zentralen Steuereinrichtung 39. Wird in einer Spur weniger Material oder vorübergehend kein Material benötigt, kann die Abrollrate der betreffenden Spur durch Verringern der Umlaufgeschwindigkeit des Reibbandes 25 bzw. durch Abschalten des Antriebsmotors M entsprechend geändert werden. In einem Nichtantriebszustand bei ausgeschaltetem Antriebsmotor M verbleibt der betreffende Antriebsarm 27 mit seinem Reibband 25 in Reibeingriff mit der aufgewickelten Materialbahn 19, wird also nicht etwa mittels des vorstehend erwähnten Schwenkantriebs (nicht dargestellt) außer Eingriff mit der Materialrolle 17 geschwenkt. Dies hat den Vorteil, dass das Reibband 25 als Bremse für die Materialrolle 17 wirksam ist, wodurch ein trägheitsbedingtes Weiterdrehen der Materialrolle 17 verhindert wird.

Das Abnehmen der Materialbahnen 19 von den Materialrollen 17 umfasst nicht nur das Abrollen mittels der vorstehend erläuterten Abrollantriebe 21, sondern außerdem das Fördern der Materialbahnen 19 in den Schlaufenspeicher 61 hinein. Hierzu umfasst die Abnahmeeinrichtung eine Fördereinrichtung 23 die zusätzlich schematisiert oben in der Mitte der Fig. 1 dargestellt ist.

Für jede Spur S1 bis S4 umfasst die Fördereinrichtung 23 eine Förderrolle 47, die zusammen mit einer Gegenrolle 48 einen Förderspalt für die jeweilige Materialbahn 19 bildet. Alle Förderrollen 47 sitzen auf einer gemeinsamen Antriebswelle 45, werden also nur gemeinsam angetrieben, und zwar über einen gemeinsamen Antriebsmotor 41, der über einen Antriebsriemen 42 die gemeinsame Antriebswelle 45 der Förderrollen 47 in Drehung versetzt.

Der spurindividuelle Betrieb dieser Fördereinrichtung 23 wird dadurch erreicht, dass jeder Förderrolle 47 eine Rutschkupplung 43 zugeordnet ist, die zwischen der Förderrolle 47 und der gemeinsamen Antriebswelle 31 angeordnet ist. Bei den Rutschkupplungen 43 handelt es sich jeweils um eine Magnetkupplung, deren Schaltpunkt eingestellt werden kann.

Über die Steuereinrichtung 39 wird die Fördereinrichtung 23 derart betrieben, dass die Materialbahnen 19 jeweils zwischen der betreffenden Materialrolle 17 und der betreffenden Förderrolle 47 stets auf Spannung gehalten wird. Während des Betriebs kann die gemeinsame Antriebswelle 45 mit einer konstanten Drehzahl rotieren, die auf einen erwarteten Betrieb des Interleavers für das jeweilige Schneidprogramm des Slicers abgestimmt ist. Wird in einer Spur der Abrollantrieb 21 angehalten oder verringert sich die Abrollrate in einer Spur, braucht in den Betrieb der Fördereinrichtung 23 nicht aktiv eingegriffen zu werden, da eine unter die Förderrate der Fördereinrichtung 23 abfallende Abrollrate in einer Spur durch die Kupplung 43 dieser Spur abgefangen wird, ohne dass die betreffende Materialbahn 19 übermäßig beansprucht wird oder gar reißt.

Ein Vorteil dieses Konzepts besteht darin, dass die Fördereinrichtung 23 nur einen einzigen Antrieb mit Antriebsmotor 41 und Antriebsriemen 42 und lediglich eine einzige gemeinsame Antriebswelle 45 für alle Spuren S1 bis S4 benötigt und keine konstruktiven oder steuerungstechnischen Maßnahmen erforderlich sind, um einen aktiv spurindividuellen Betrieb der Fördereinrichtung 23 zu realisieren.

Wenn nicht gerade in einer der Spuren die Kupplung 43 aktiv ist und somit in dieser Spur vorübergehend kein Material in den Schlaufenspeicher 61 hinein gefördert wird, bestimmt die Förderrate der Fördereinrichtung 23 die in jeder Spur pro Zeiteinheit in den Schlaufenspeicher 61 gelangende Bahnlänge. Da letztlich der über die Steuereinrichtung 39 gesteuerte Betrieb der einzelnen Abrollantriebe 21 darüber entscheidet, ob und wieviel Material pro Zeiteinheit in den einzelnen Spuren von der jeweiligen Materialrolle 17 abgerollt wird, sind die einzelnen Förderraten in den Schlaufenspeicher 61 hinein letztlich durch die einzelnen Abrollraten bestimmt.

Der spurbezogene Materialbedarf im Schneidbereich wird von der Steuereinrichtung 39 ermittelt und durch eine entsprechende spurbezogene Ansteuerung der Abrollantriebe 21 sichergestellt. Der Schlaufenspeicher 61 sorgt in jeder Spur für eine Entkopplung zwischen der trägen Materialrolle 17 einerseits und der hochdynamischen Ausgabeeinrichtung 71 andererseits, die im Takt des Schneidmessers 51 jeweils kurzfristig eine der Länge des jeweils benötigten Zwischenblatts 15 entsprechende Bahnlänge ausgeben muss. Ein derart hochdynamisches taktweises Ausstoßen von relativ langen Materialabschnitten wäre mit einem Abziehen der Materialbahn 19 unmittelbar von der Materialrolle 17 unvereinbar.

Die Steuereinrichtung 39 sorgt deshalb dafür, dass in jeder Spur zu jedem Zeitpunkt eine für einen störungsfreien Ausgabebetrieb der Ausgabeeinrichtung 71 ausreichend große Bahnlänge im Schlaufenspeicher 61 zur Verfügung steht, indem für eine stets ausreichend große Materialschlaufe 20 im Schlaufenspeicher 61 gesorgt wird.

Die Bildung und Aufrechterhaltung dieser Materialschlaufen 20 in den einzelnen Spuren wird zum einen durch einen ausreichend großen "Nachschub" mittels der Abnahmeeinrichtung, also der Abrollantriebe 21 und der Fördereinrichtung 23, und zum anderen durch einen Luftkreislauf mit einer kombinierten Saug- und Blaseinrichtung 63, 65 erzielt.

Ein zu dieser kombinierten Saug- und Blaseinrichtung 63, 65 gehörendes Gebläse 64 ist mit seiner Saugseite über eine Saugleitung 66 an ein Unterdruckgehäuse 68 angeschlossen, in welchem mehrere, innerhalb des Gehäuses 68 strömungstechnisch voneinander getrennte Unterdruckkammern 69 ausgebildet sind. Mittels nicht dargestellter Sensoren kann der Druck in jeder Unterdruckkammer 69 gemessen und der Steuereinrichtung 39 zur Verfügung gestellt werden.

Zu einem Schlaufenbereich des Schlaufenspeichers 61 hin ist das Gehäuse 68 durch eine gekrümmte Anlagefläche 67 begrenzt, in der Öffnungen ausgebildet sind, über welche Luft aus dem Schlaufenbereich in die einzelnen Unterdrucckammern 69 gelangen kann, wie es durch die kleinen Pfeile angedeutet ist. Die Unterdruckkammern 69 sind jeweils an die Saugleitung 66 und somit an die Saugseite des Gebläses 64 angeschlossen, das mit seiner Druckseite in den Schlaufenbereich hinein gerichtet ist, wie es in Fig. 1 durch den Pfeil angedeutet ist.

Dieser Luftkreislauf bewirkt, dass stets eine bestimmungsgemäße Materialschlaufe 20 geformt wird und die Materialbahn 19 bestimmungsgemäß an der Anlagefläche 67 des Unterdruckgehäuses 68 anliegt. Da die Materialbahn 19 aufgrund des in den Unterdruckkammern 69 herrschenden Unterdrucks gegen die Anlagefläche 67 gesaugt wird, dient die Anlagefläche 67 gleichzeitig als Bremse für die Materialbahnen 19. Hierdurch werden die Materialbahnen 19 stets unter leichter Spannung gehalten, wodurch verhindert wird, dass sich die Materialbahnen 19 aufstauchen, wenn die im Schneidtakt arbeitende Ausgabeeinrichtung 71 die Materialbahnen 19 hochdynamisch aus dem Schlaufenspeicher 61 herauszieht. Die Bremswirkung der Anlagefläche 67 bzw. der Unterdruckkammern 69 ist dabei derart eingestellt, dass dieser hochdynamische Entnahmeprozess nicht beeinträchtigt wird.

Mittels der erwähnten Drucksensoren in den Unterdruckkammern 69 kann die Steuereinrichtung 39 erkennen, welche Unterdruckkammer 69 von der Materialbahn 19 bedeckt ist und welche nicht. Aus diesen Informationen kann auf einfache Weise mit ausreichender Genauigkeit ein Maß für die momentane Größe der Materialschlaufe 20 im Schlaufenbereich des Schlaufenspeichers 61 abgeleitet werden. In Fig. 1 ist die gestrichelt gezeichnete Materialbahn 19 mit einer maximalen Schlaufengröße dargestellt. Durch eine gepunktete Linie ist der Verlauf der Materialbahn 19 mit minimaler Schlaufengröße angedeutet, bei der nur noch die oberste Unterdruckkammer 69 teilweise von der Materialbahn 19 abgedeckt ist.

Die Steuerung 39 kann gemäß der so ermittelten individuellen Schlaufengrößen spurindividuell die einzelnen Abrollantriebe 21 aktivieren oder deaktivieren bzw. die einzelnen Abrollraten durch entsprechende Ansteuerung der Motoren M1 bis M4 verändern, um sicherzustellen, dass für jede Spur zu jedem Zeitpunkt eine ausreichend große Materialschlaufe 20 vorhanden ist, um die vorstehend erläuterte Entkopplung zwischen der betreffenden Spur der Ausgabeeinrichtung 71 und der zugehörigen Materialrolle 17 aufrechtzuerhalten.

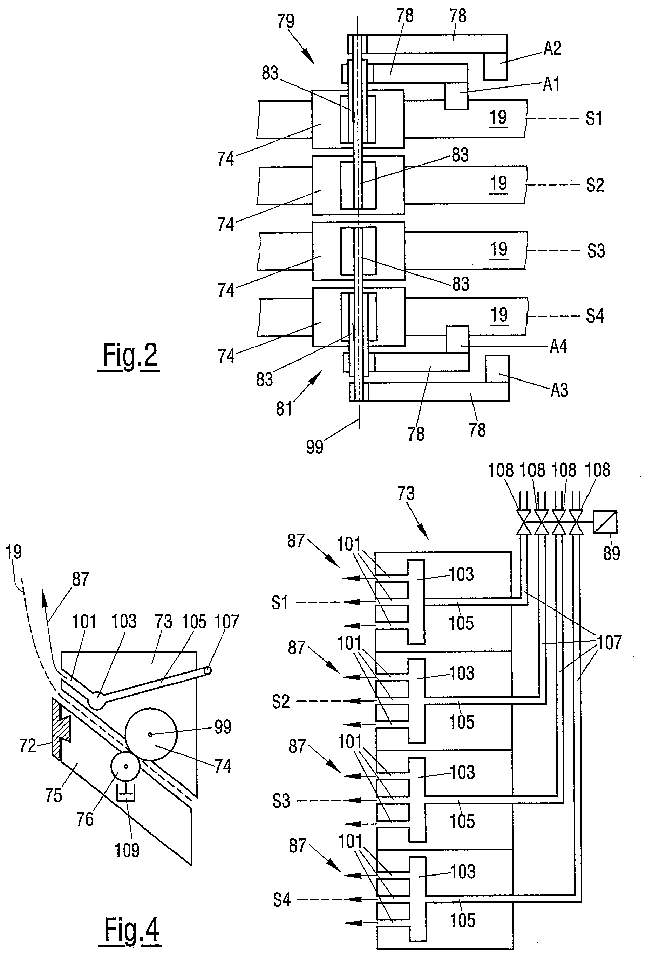

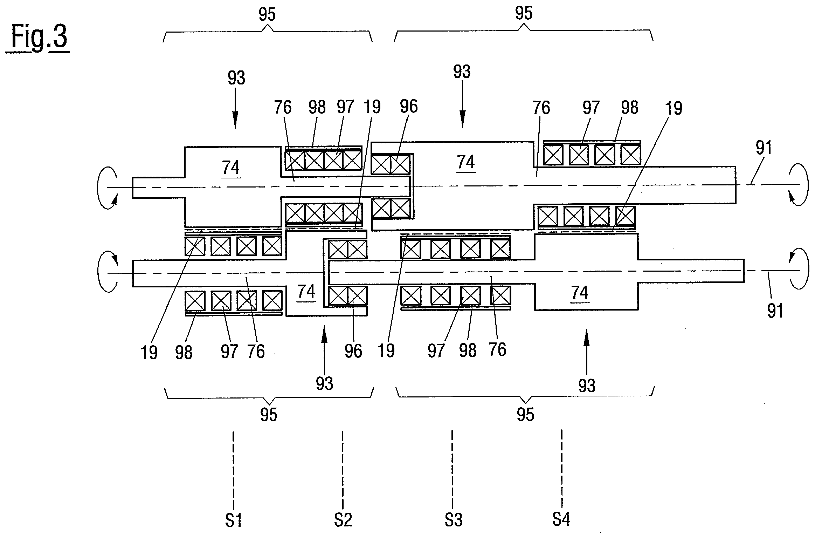

Die Ausgabeeinrichtung 71 ist ebenfalls zu einem spurindividuellen Betrieb ausgebildet. Hierzu umfasst eine Vorschubeinheit 73 für jede der Spuren S1 bis S4 eine Vorschubwalze 74, wie nachstehend anhand zweier möglicher Ausführungsbeispiele gemäß den Fig. 2 und 3 näher erläutert wird. Die Vorschubwalzen 74 besitzen eine gemeinsame Drehachse 99, wobei für jede Vorschubwalze 74 ein eigener Antriebsmotor A1, A2, A3 bzw. A4 vorgesehen ist, der über einen Antriebsriemen 78 mit einer Antriebswelle 83 (vgl. Fig. 2) zusammenwirkt, mit der die betreffende Vorschubwalze 74 drehfest verbunden ist.

Wie Fig. 2 zeigt, werden die beiden Vorschubwalzen 74 für die Spuren S1 und S2 über einen rechten Koaxialwellenantrieb 79 angetrieben, während ein linker Koaxialwellenantrieb 81 die beiden Vorschubwalzen 74 der anderen beiden Spuren S3 und S4 antreibt. Die jeweils innenliegende Vorschubwalze 74 wird über eine innenliegende Antriebswelle 83 angetrieben, wohingegen die jeweils außenliegende Vorschubwalze 74 über eine die innenliegende Antriebswelle 83 umgebende Hohlwelle 83 angetrieben wird.

Auf diese Weise lässt sich ein spurindividueller Antrieb von vier auf einer gemeinsamen Drehachse 99 nebeneinander angeordneten Vorschubwalzen 74 für die Vorschubeinheit 73 der Ausgabeeinrichtung 71 realisieren.

Eine alternative Ausgestaltung für einen Vierspurantrieb mit vier individuell antreibbaren Vorschubwalzen 74 ist schematisch in Fig. 3 dargestellt. Hier sind zwei parallel verlaufende Drehachsen 91 vorgesehen, wobei auf jeder der beiden Achsen 91 jeweils zwei Zweispureinheiten 95 nebeneinander angeordnet sind. Jede Zweispureinheit 95 umfasst eine Vorschubwalze 74 und eine Andrückrolle 76, die drehfest miteinander verbunden sind und beispielsweise einstückig miteinander ausgebildet sein können. Jede Vorschubwalze 74 wirkt unmittelbar mit einer jeweiligen Materialbahn 19 zusammen, während die mitrotierende Andrückrolle 76 mit einer Freilauffunktion bezüglich der Materialbahn 19 in ihrer Spur versehen ist. Die Freilauffunktion ist dadurch realisiert, dass die Andrückrolle 76 über ein Wälzlager 97 eine frei drehbare Andrückhülse 98 für die Materialbahn 19 trägt.

Für jede der Spuren S1 bis S4 bilden also eine Vorschubwalze 74 auf der einen Achse 91 und eine Andrückeinheit aus Andrückrolle 76 und Andrückhülse 98 auf der anderen Achse 91 ein Paar 93, das einen Vorschubspalt für die betreffende Materialbahn 19 bildet.

Jede Zweispureinheit 95 kann beispielsweise über einen nicht dargestellten Antriebsriemen mittels eines zugehörigen Antriebsmotors (nicht dargestellt) um die jeweilige Achse 91 gedreht werden, wobei die beiden Achsen 91 mit entgegengesetztem Drehsinn angetrieben werden. Benachbarte Zweispureinheiten 95 auf einer gemeinsamen Achse 91 sind relativ zueinander verdrehbar. Hierzu greift jeweils eine axiale Verlängerung einer Andrückrolle 76 in eine stirnseitige Vertiefung der benachbarten Vorschubwalze 74 ein, an der die Verlängerung der Andrückrolle 76 in radialer Richtung durch ein Wälzlager 96 abgestützt ist.

Durch diese Anordnung ist ein spurindividueller Vorschub für vier nebeneinanderliegende Spuren S1 bis S4 als eine besonders kompakte Einheit realisiert, in welche die den einzelnen Vorschubwalzen 74 zugeordneten Gegeneinheiten bzw. Andrückeinheiten 76, 98 integriert sind. Eine Aufteilung in eine Vorschubeinheit einerseits und eine Gegeneinheit andererseits wie beim Ausführungsbeispiel gemäß den Fig. 1 und 2 ist hier folglich nicht vorgesehen.

Wie Fig. 1 zeigt, ist bei dem hier dargestellten Ausführungsbeispiel zusätzlich zu der Vorschubeinheit 73 mit den vier spurindividuell antreibbaren Vorschubwalzen 74 eine Gegeneinheit 75 vorgesehen. Die Gegeneinheit 75 kann für jede Vorschubwalze 74 zumindest eine zugehörige Andrückrolle 76 aufweisen, die elastisch oder federnd gelagert ist, wie in Fig. 1 schematisch durch die Federung 77 und in Fig. 4 schematisch durch eine als Federung ausgebildete Kolben/ZylinderAnordnung 109 angedeutet ist.

Alternativ kann die Gegeneinheit 75 eine Vielzahl von längs einer parallel zur Drehachse 99 der Vorschubwalzen 74 verlaufenden Achse verteilt angeordneten Gegenelementen insbesondere in Form von individuell federnd gelagerten Andrückwalzen oder Andrückrollen jeweils mit einem gegenüber den Vorschubwalzen 74 kleinen Durchmesser aufweisen. Diese nicht angetriebenen Gegenelemente bilden mit jeder der Vorschubwalzen 74 einen Vorschubspalt für eine der Materialbahnen 19. Derartige Gegeneinheiten oder Andrückeinheiten für Ausgabeeinrichtungen von Interleavern sind grundsätzlich bekannt, weshalb hierauf nicht näher eingegangen zu werden braucht.

Wie die Darstellung unten links in Fig. 1 schematisch zeigt, besteht eine Besonderheit der Ausgabeeinrichtung 71 darin, dass die Vorschubeinheit 73 und die Gegeneinheit 75 zusammen mit einer auch als Schneidbrille, Formschale oder Gegenmesser bezeichneten Schneidkante 85 an einer stationären Aufnahme 70 angebracht sind, die an einem Maschinengestell 115 des Slicers befestigt ist.

Die Aufnahme 70 und die Komponenten Gegeneinheit 75, Vorschubeinheit 73 und Schneidkante 85 sind derart miteinander korrespondierend ausgebildet, dass diese Komponenten ausschließlich in einer einzigen Reihenfolge an der Aufnahme 70 werkzeuglos montiert werden können.

Dabei wird zuerst die Gegeneinheit 75 an der Aufnahme 70 angeordnet. Durch anschließendes Anbringen der Vorschubeinheit 73 wird die Gegeneinheit 75 in ihrer Sollposition fixiert und gesichert. Die Anbringung der Vorschubeinheit 73 erfordert eine kombinierte Dreh-/Schwenkbewegung in eine Endposition, die-wie durch den Pfeil in der großen Darstellung der Fig. 1 angedeutet - zur Folge hat, dass beim Anbringen der Vorschubeinheit 73 alle Antriebsriemen 78 der Antriebsmotoren A1 bis A4 gleichzeitig gespannt werden, die zuvor im entspannten Zustand um die zu beiden Seiten vorstehenden Antriebswellen 83 der Vorschubwalzen 74 gelegt worden sind. Entsprechend werden bei der Entnahme der Vorschubeinheit 73 die Antriebsriemen 78 automatisch entspannt.

Zuletzt wird die Schneidkante 85 an der Aufnahme 70 angebracht. Die Schneidkante 85 wiederum positioniert und sichert die Vorschubeinheit 73 in ihrer Sollposition. Eine Spanneinrichtung 117, die zwei pneumatisch relativ zur Aufnahme 70 - wie durch die beiden Doppelpfeile angedeutet - verstellbare Spannbolzen 117 umfasst, positioniert und sichert abschließend die Schneidkante 85 und damit alle drei Komponenten Gegeneinheit 75, Vorschubeinheit 73 und Schneidkante 85 an der Aufnahme 70.

Die Aufnahme 70 kann darüber hinaus zur Anbringung weiterer Einrichtungen dienen. So kann es z.B. in der Praxis erforderlich sein, den sogenannten Schneidspalt zwischen dem Schneidmesser 51 und der Schneidkante 85 auf einen bestimmten Wert einzustellen. In diesem Zusammenhang können Sensoren wie z.B. Schwingungssensoren eingesetzt werden, die an der Aufnahme 70 angebracht oder in die Aufnahme 70 integriert werden können.

Auf diese Weise ist eine einfache und zuverlässige werkzeuglose Montage und Demontage der drei genannten Komponenten realisiert.

Mittels der Spannbolzen 117 kann zudem eine Abfrage durch die Steuereinrichtung 39 erfolgen und erkannt werden, ob überhaupt eine Schneidkante 85 vorhanden ist und ob - in Abhängigkeit von dem jeweils eingestellten Schneidprogramm - die richtige Schneidkante 85 montiert worden ist. Bei fehlender Schneidkante 85 beispielsweise fahren die Spannbolzen 117 weiter aus als bei vorhandener korrekter Schneidkante 85 - diese Fehlpositionierung der Spannbolzen 117 kann von der Steuereinrichtung 39 erkannt werden.

Wie vorstehend bereits erläutert, erfolgt das Ausstoßen der Materialbahn 19 mittels der Ausgabeeinrichtung 71 derart, dass das vordere Ende der Materialbahn 19 vor der Schnittfläche des jeweiligen Produktes 11 liegt, damit es zusammen mit der als nächstes abzutrennenden Scheibe 13 von der Materialbahn 19 mittels des Schneidmessers 51 abgeschnitten und so ein Zwischenblatt 15 bilden kann.

Um das vordere Ende der Materialbahn 19 in diesem Sinne zu beeinflussen, wird mittels einer Luftströmung in dem Bereich zwischen der Materialbahn 19 und der Schnittfläche des Produkts 11 ein Unterdruck erzeugt, der bewirkt, dass sich das vordere Ende der Materialbahn 19 gegen die Schnittfläche legt. Dieses Konzept ist grundsätzlich bekannt. Die Luftströmung kann z.B. dadurch erzeugt werden, dass Druckluft über einen sich quer zur Materialbahn 19 erstreckenden Spalt oder über mehrere in Querrichtung verteilt angeordnete Öffnungen ausgestoßen wird.

Wie Fig. 4 zeigt, wird erfindungsgemäß über die Vorschubeinheit 73 für jede der Spuren S1 bis S4 eine individuell variierbare Luftströmung 87 erzeugt, so dass die freien Enden der einzelnen Materialbahnen 19 spurindividuell beeinflusst werden können. Die einzelnen Luftströmungen 87 können in zeitlicher Hinsicht sowie hinsichtlich ihrer Stärke spurindividuell variiert werden.

Dies wird dadurch erreicht, dass im vorderen Bereich der Vorschubeinheit 73 oberhalb des von der Vorschubeinheit 73 und der Gegeneinheit 75 gebildeten Austrittsspalts für die einzelnen Materialbahnen 19 für jede Spur S1 bis S4 mehrere Austrittsöffnungen quer zur jeweiligen Materialbahn 19 verteilt angeordnet sind.

Jede Austrittsöffnung gehört zu einem in der Vorschubeinheit 73 ausgebildeten Auslasskanal 101, wobei alle Auslasskanäle 101 von einem gemeinsamen Verteilerraum 103 ausgehen, der über einen Einlasskanal 105 und eine Zufuhrleitung 107 mit einer nicht dargestellten Druckluftquelle in Verbindung steht. Jede Zufuhrleitung 107 ist mit einem steuerbaren Ventil 108 versehen. Die Ventile 108 können über eine Stelleinrichtung 89 spurindividuell angesteuert werden.

Hierdurch können für jede der Spuren S1 bis S4 das zeitliche Verhalten und die Stärke der jeweiligen Luftströmung 87 unabhängig von den jeweils anderen Spuren variiert werden.

Bei der in Fig. 4 außerdem dargestellten Leiste 72 handelt es sich um ein auswechselbares Verschleißteil bevorzugt aus Kunststoff, das als mit dem Schneidmesser 51 beim Durchtrennen der einzelnen Materialbahnen 19 zusammenwirkende Schneidkante dient.

Der Interleaver kann dazu ausgebildet sein, in jeder der einzelnen Spuren S1 bis S4 aufeinanderfolgende Materialbahnen 19 automatisch miteinander zu verbinden. In Fig. 1 sind schematisch mögliche Positionen dargestellt, an denen eine in den Interleaver integrierte Verbindungseinrichtung V angeordnet werden kann.

In Fig. 1 nicht dargestellt ist eine Wechseleinrichtung, die dazu ausgebildet ist, eine jeweils genutzte Materialrolle 17 automatisch gegen eine zu nutzende Materialrolle 17 zu wechseln. Die Wechseleinrichtung kann außerhalb des Interleavers angeordnet oder wenigstens zum Teil in den Interleaver integriert sein. Für jede der Spuren S1 bis S4 kann eine eigene Wechseleinrichtung vorgesehen sein. Alternativ können mehrere Spuren oder alle Spuren eine gemeinsame Wechseleinrichtung aufweisen.

Eine Mehrspurigkeit des Interleavers kann auch dadurch realisiert werden, dass für mehrere Spuren S eine gemeinsame, drehbar gelagerte Materialrolle 17 vorgesehen ist, wobei für die Materialbahn 19 dieser gemeinsamen Materialrolle 17 eine Einrichtung T zum Teilen der Materialbahn 19 in mehrere einzelne Materialbahnen 19 vorgesehen ist. Eine mögliche Position, an der eine solche, in den Interleaver integrierte Teilungseinrichtung T angeordnet werden kann, ist in Fig. 1 schematisch angedeutet. Für diese Spuren S, d.h. für die betreffende Materialrolle 17, ist dann lediglich ein Abrollantrieb 21 vorgesehen.

Dabei ist es z.B. möglich, dass ein vierspuriger Interleaver dadurch realisiert wird, dass zwei Materialrollen 17 vorgesehen sind, denen jeweils ein Abrollantrieb 21 und eine Teilungseinrichtung T zugeordnet sind, d.h. aus deren Materialbahn 19 jeweils zwei einzelne Materialbahnen 19 entstehen, so dass an die den Teilungseinrichtungen T nachgeordneten Einrichtungen vier einzelne Materialbahnen 19 wie in dem Fall gelangen, dass für jede Spur S eine eigene Materialrolle 17 und keine Teilungseinrichtung T vorgesehen ist.

Unterschiedliche Kombinationen sind denkbar. So kann z.B. bei einem vierspurigen Interleaver für zwei Spuren jeweils eine eigene Materialrolle und für zwei wietere Spuren eine gemeinsame Materialrolle und eine Teilungseinrichtung vorgesehen sein.

Bei dem erfindungsgemäßen Interleaver ist folglich eine durchgehend spurindividuelle Handhabung der einzelnen Materialbahnen 19 möglich, so dass der Interleaver mittels der Steuereinrichtung 39 in Abhängigkeit von dem Schneidprozess derart betrieben werden kann, dass der spurindividuelle Interleaverbetrieb perfekt auf den spurindividuellen Schneidbetrieb abgestimmt werden kann.

Der Vollständigkeit halber ist noch zu erwähnen, dass auch ein einspurig ausgebildeter oder vorübergehend einspurig betriebener Interleaver einen Abrollantrieb aufweisen kann, wie er vorstehend jeweils für eine der Spuren S1 bis S4 beschrieben ist.

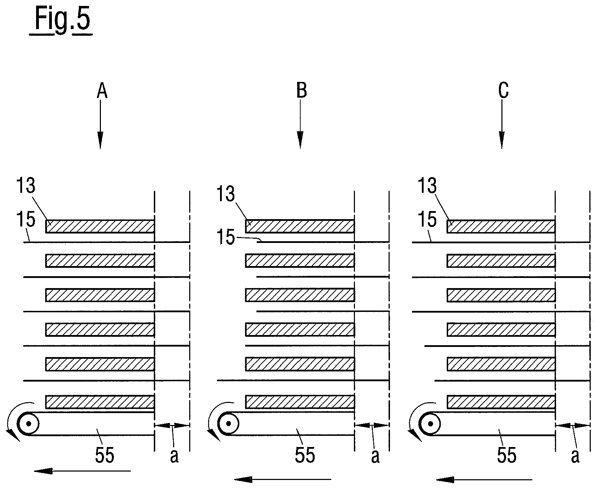

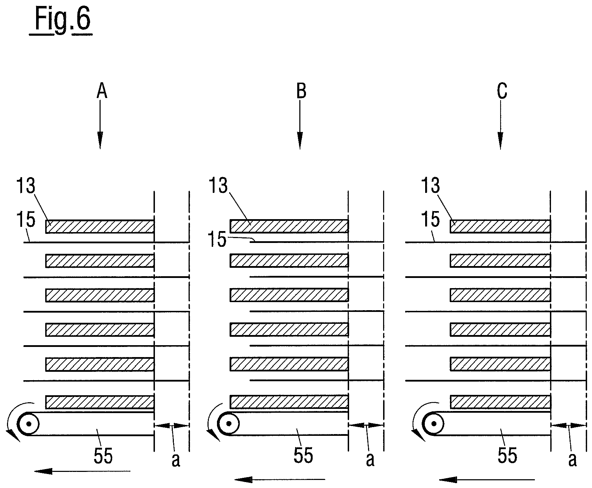

In den Fig. 5 und 6 ist jeweils in den Darstellungen A, B und C schematisch eine Portion dargestellt, die mehrere übereinander angeordnete Scheiben 13 umfasst, zwischen denen sich Zwischenblätter 15 befinden. Die Portionen liegen jeweils noch auf dem Portionierband 55, auf welches während des Schneidens nacheinander die abgetrennten Scheiben 13 fallen und mittels welchem die Portionen jeweils nach ihrer Fertigstellung in der durch den Pfeil angedeuteten Abtransportrichtung aus dem Schneidbereich heraus bewegt werden.

Die Darstellungen A zeigen jeweils den Stand der Technik, bei dem alle Zwischenblätter 15 die gleiche Normallänge aufweisen. Die Größe der Normallänge wird vor Beginn des Aufschneidebetriebs vom Bediener des Slicers in Abhängigkeit von der jeweiligen Anwendung insbesondere in Abhängigkeit von der Ausdehnung der Produktscheiben in Ausstoßrichtung des Zwischenblattmaterials festgelegt und während des Schneidbetriebs nicht geändert.

Derartige Portionen können mittels eines Hochgeschwindigkeitsslicers mit Interleaver hergestellt werden, wie er beispielsweise vorstehend in Verbindung mit den Fig. 1 bis 4 beschrieben worden ist. Dieser Slicer ist darüber hinaus dazu ausgebildet, in erfindungsgemäßer Weise während des Betriebs die Länge der Zwischenblätter 15 gegenüber der Normallänge zu verändern. Die Fig. 5 und 6 zeigen jeweils in den Darstellungen B und C verschiedene Möglichkeiten, wie eine solche Längenveränderung erfolgen kann.

Gemäß Darstellung B in Fig. 5 wird die Länge der Zwischenblätter 15 innerhalb der Portion ausgehend von der Normallänge reduziert, wobei für die zuletzt eingebrachten drei Zwischenblätter 15 der Portion die reduzierte Länge gleich ist. Dabei wurde die Normallänge derart reduziert, dass die in Ausstoßrichtung vorderen Enden der Zwischenblätter 15 jeweils zwischen den betreffende Scheiben 13 liegen und somit nicht vorne aus der Portion herausragen.

In Darstellung C ist der umgekehrte Fall dargestellt, bei dem ausgehend von der Normallänge innerhalb der Portion die Länge der Zwischenblätter 15 vergrößert wird. Folglich ragen hier alle Zwischenblätter 15 vorne aus der Portion heraus.

Wie der Vergleich der drei Darstellungen A, B und C zeigt, ist der hintere Überstand a der Zwischenblätter 15 stets gleich groß und von der erfindungsgemäßen Veränderung der Länge der Zwischenblätter 15 gemäß den Darstellungen B und C nicht betroffen. Wie eingangs bereits erwähnt, ergibt sich eine solche Situation automatisch, wenn die Zwischenblätter 15 im Schneidbereich von dem bereitgestellten Zwischenblattmaterial mittels des Schneidmessers abgetrennt werden, welches auch die jeweiligen Scheiben 13 von den Produkten abtrennt.

Dies gilt auch für die in den Darstellungen B und C der Fig. 6 gezeigten Varianten. Die Darstellung A in Fig. 6 ist mit der Darstellung A in Fig. 5 identisch. Hierbei ist insbesondere vorgesehen, dass sich jeweils der Austritt des Zwischenblattmaterials geringfügig unterhalb der von einer Ablagefläche für die Scheiben 13 definierten Ablageebene im Schneidbereich befindet. Die Ablagefläche kann z.B. von einem Portionierband 55 bereitgestellt sein, wie es die Fig. 5 und 6 und auch die Fig. 1 zeigen.

Anders als in Fig. 5 ist bei den Varianten gemäß den Darstellungen B und C in Fig. 6 die reduzierte (Darstellung B) bzw. die vergrößerte (Darstellung C) Länge der Zwischenblätter innerhalb der jeweiligen Portion konstant. Eine konstante Zwischenblattlänge innerhalb einer Portion kann für viele Anwendungen aufgrund des besonders gleichmäßigen Erscheinungsbildes die bevorzugte Ausführung darstellen.

Vor diesem Hintergrund kommt es auf eine konstante Zwischenblattlänge dann nicht an, wenn die Zwischenblattlänge ohnehin derart gegenüber der Normallänge reduziert ist, dass selbst ein Zwischenblatt 15 mit im Rahmen der Verbrauchsbeeinflussung maximaler Länge vorne nicht aus der Portion heraus ragt.

Der Vorteil der Erfindung besteht generell darin, dass der Materialverbrauch derart beeinflusst werden kann, dass die Materialvorräte gleichmäßig aufgebraucht werden oder zumindest erreicht werden kann, dass zu einem bestimmten Zeitpunkt in allen Materialvorräten jeweils zumindest ungefähr die gleiche Restmenge vorhanden ist.

Dabei ist es nicht zwingend, dass die Materialvorräte erst dann den gleichen Restmengenzustand aufweisen, wenn die Materialvorräte mehr oder weniger vollständig aufgebraucht sind und somit die Restmengen jeweils ungefähr Null sind. Eine gleich große Restmenge in allen Materialvorräten ist auch dann von Vorteil, wenn die Restmenge von Null verschieden, in den Materialvorräten also jeweils noch eine Materialbahn von relevanter Längs vorhanden ist. Materialvorräte mit derartigen Restmengen können beispielsweise gemeinsam entnommen und für eine spätere Anwendung aufbewahrt werden, bei der eine vergleichsweise kleine Charge von Produkten aufgeschnitten werden soll und folglich relativ wenig Material benötigt wird.

Insgesamt lassen sich mit der Erfindung Arbeitsunterbrechungen und Zeitverluste durch vereinzelte Vorratsauffüllvorgänge, wie beispielsweise Materialrollenwechselvorgänge, minimieren. Insbesondere im Hinblick auf die gesamte Aufschneidelinie kann hierdurch deren Betrieb besser im Voraus geplant werden. Der Produktdurchsatz der Aufschneidelinie kann dabei ohne Einbußen an anderer Stelle erhöht werden.

### Bezuqszeichenliste

- 11: Produkt
- 13: Scheibe
- 15: Zwischenblatt
- 17: Materialrolle
- 19: Materialbahn
- 20: Schlaufe
- 21: Abrollantrieb
- 23: Fördereinrichtung
- 24: Antriebsriemen
- 25: Reibband, Antriebsorgan
- 27: Antriebsarm
- 28: Schwenkachse
- 29: Drehachse der Antriebswellen
- 30: Antriebsrolle
- 31: Antriebswelle
- 32: Umlenkrolle
- 33: Drehachse der Materialrollen
- 35: oberer Koaxialwellenantrieb
- 37: unterer Koaxialwellenantrieb
- 39: Steuereinrichtung
- 41: Antrieb der Fördereinrichtung
- 42: Antriebsriemen
- 43: Kupplung
- 45: Antriebswelle
- 46: Produkthalter
- 47: Förderrolle
- 48: Gegenrolle
- 49: Produktzufuhr
- 50: Schneidebene
- 51: Schneidmesser
- 53: Produktauflage
- 55: Portionierband
- 61: Schlaufenspeicher
- 63: Saugeinrichtung, Bremse
- 64: Gebläse
- 65: Blaseinrichtung
- 66: Saugleitung
- 67: Anlagefläche
- 68: Gehäuse
- 69: Unterdruckkammer
- 70: Aufnahme
- 71: Ausgabeeinrichtung
- 72: Leiste

- 73: Vorschubeinheit
- 74: Vorschubwalze
- 75: Gegeneinheit
- 76: Andrückrolle
- 77: Federung
- 78: Antriebsriemen
- 79: rechter Koaxialwellenantrieb
- 81: linker Koaxialwellenantrieb
- 83: Antriebswelle
- 85: Schneidkante
- 87: Druckluftströmung
- 89: Stelleinrichtung
- 91: gemeinsame Achse
- 93: Paar
- 95: Zweispureinheit
- 96: Wälzlager
- 97: Wälzlager
- 98: Andrückhülse
- 99: gemeinsame Drehachse
- 101: Auslasskanal
- 103: Verteilerraum
- 105: Einlasskanal
- 107: Zufuhrleitung
- 108: Ventil
- 109: Kolben/Zylinder-Anordnung
- 111: Schacht
- 113: Rollenkern
- 115: Maschinengestell
- 117: Spannbolzen

- S: Spur
- M: Antriebsmotor des Abrollantriebs
- A: Antriebsmotor für Vorschubwalze
- V: Verbindungseinrichtung
- T: Teilungseinrichtung

## Patentansprüche

1. Verfahren zum mehrspurigen Bereitstellen von bahnförmigem Zwischenblattmaterial an einem Schneidbereich, in welchem mehrspurig zugeführte Produkte (11) in Scheiben (13) geschnitten und Zwischenblätter (15) eingebracht werden, die im Schneidbereich von dem bereitgestellten Zwischenblattmaterial abgetrennt werden und für die eine von der jeweiligen Anwendung abhängige Normallänge vorgegeben wird,
bei dem die Materialbahnen (19) von zumindest zwei Materialvorräten abgenommen werden, die jeweils einer oder mehreren Spuren (S) zugeordnet sind,
**dadurch gekennzeichnet, dass**
während des Betriebs der Materialverbrauch zumindest eines Materialvorrats, insbesondere in Abhängigkeit von den Restmengen in den Materialvorräten, beeinflusst wird, indem zumindest für diesen Materialvorrat in der oder den betreffenden Spuren (S) die Länge der Zwischenblätter (15) gegenüber der Normallänge verändert wird.

2. Verfahren nach Anspruch 1,
wobei die Länge der Zwischenblätter (15) dadurch verändert wird, dass die Zeitspanne geändert wird, während welcher die betreffende Materialbahn (19) in den Schneidbereich ausgestoßen wird, und/oder die Geschwindigkeit geändert wird, mit welcher die betreffende Materialbahn (19) in den Schneidbereich ausgestoßen wird.

3. Verfahren nach Anspruch 1 oder 2,
wobei die Länge der Zwischenblätter (15) dahingehend verändert wird, dass Restmengen in den Materialvorräten zu jedem Zeitpunkt oder spätestens dann, wenn die Materialvorräte zumindest weitgehend aufgebraucht sind oder wenn ein vorgegebener oder vorgebbarer Wert für die Restmengen erreicht ist oder wenn eine vorgegebene oder vorgebbare, den Schneidbetrieb betreffende Bedingung erfüllt ist, zumindest ungefähr gleich groß sind.

4. Verfahren nach einem der vorhergehenden Ansprüche,
wobei die Länge der Zwischenblätter (15) derart verändert wird, dass Restmengen in den Materialvorräten zu einer gleichen Größe tendieren, und/oder wobei die Länge der Zwischenblätter (15) zeitlich variiert wird, und/oder wobei die Länge der Zwischenblätter (15) derart verändert wird, dass jeweils innerhalb einer mehrere Scheiben (13) mit Zwischenblättern (15) umfassenden Portion die Zwischenblätter (15) die gleiche Länge aufweisen, und/oder wobei der Materialverbrauch ausschließlich durch Reduzieren der Normallänge beeinflusst wird.

5. Verfahren nach einem der vorhergehenden Ansprüche,
wobei der Materialverbrauch durch Erhöhen der Normallänge beeinflusst wird, und zwar entweder ausschließlich oder zusätzlich zu einem Reduzieren der Normallänge für wenigstens einen der anderen Materialvorräte.

6. Verfahren nach einem der vorhergehenden Ansprüche,
wobei die Länge der Zwischenblätter (15) derart reduziert wird, dass das vordere Ende zumindest eines oder einiger Zwischenblätter (15) zwischen den jeweils unmittelbar angrenzenden Scheiben (13) liegt.

7. Verfahren nach einem der vorhergehenden Ansprüche,
wobei mittels einer Messeinrichtung Restmengen in den Materialvorräten bestimmt und an die Steuereinrichtung (39) kommuniziert werden.

8. Verfahren nach einem der vorhergehenden Ansprüche,
wobei als ein Maß für Restmengen in den Materialvorräten jeweils der Durchmesser einer den Materialvorrat bildenden Materialrolle (17) gemessen wird, und/oder wobei als ein Maß für Restmengen in den Materialvorräten jeweils das Gewicht des Materialvorrats gemessen wird, und/oder wobei als ein Maß für Restmengen in den Materialvorräten jeweils die Länge der Materialbahn (19) gemessen wird, die durch eine dem Materialvorrat nachgeordnete Messstelle gelaufen ist, und/oder wobei als ein Maß für Restmengen in den Materialvorräten jeweils ein Parameter, insbesondere die Anzahl von Umdrehungen zumindest einer Komponente oder die Stromaufnahme, einer die Materialbahn (19) von dem Materialvorrat abnehmenden Abnahmeeinrichtung (21, 23) gemessen wird.

9. Verfahren nach einem der vorhergehenden Ansprüche,
wobei zumindest einige jeweils mehrere Scheiben (13) mit Zwischenblättern (15) umfassende Portionen daraufhin überprüft werden, ob die Längenänderungen der Zwischenblätter (15) innerhalb vorgebbarer oder vorgegebener Grenzen liegen.

10. Vorrichtung zum mehrspurigen Bereitstellen von bahnförmigem Zwischenblattmaterial an einem Schneidbereich, in welchem mehrspurig zugeführte Produkte (11) in Scheiben (13) geschnitten und Zwischenblätter (15) eingebracht werden, die im Schneidbereich von dem bereitgestellten Zwischenblattmaterial abgetrennt werden und für die eine von der jeweiligen Anwendung abhängige Normallänge vorgegeben ist, wobei zumindest zwei Materialvorräte vorgesehen sind, die jeweils einer oder mehreren Spuren (S) zugeordnet und von denen die einzelnen Materialbahnen (19) abnehmbar sind,
**dadurch gekennzeichnet, dass**
während des Betriebs durch eine interne oder externe Steuereinrichtung (39) der Materialverbrauch zumindest eines Materialvorrats, insbesondere in Abhängigkeit von den Restmengen in den Materialvorräten, beeinflussbar ist, indem zumindest für diesen Materialvorrat in der oder den betreffenden Spuren (S) die Länge der Zwischenblätter (15) gegenüber der Normallänge veränderbar ist, wobei insbesondere die Vorrichtung gemäß einem Verfahren nach einem der Ansprüche 1 bis 9 betreibbar ist.

11. Vorrichtung nach Anspruch 10,
wobei zum Ausstoßen der Materialbahnen (19) in den Schneidbereich eine mehrspurige Ausgabeeinrichtung (71) vorgesehen ist, die für jede Spur (S) eine angetriebene Vorschubwalze (74) umfasst, welche zusammen mit einer Gegeneinheit (75) einen Vorschubspalt für die Materialbahn (19) bildet, und die durch spurindividuelles Betreiben der einzelnen Vorschubwalzen (74) mittels der Steuereinrichtung (39) steuerbar ist.

12. Vorrichtung nach Anspruch 10 oder 11,
wobei die Steuereinrichtung (39) zur Ausführung einer Regelung ausgebildet ist, bei der eine direkt oder indirekt von Restmengen in den Materialvorräten abhängige Regelgröße als Ist-Wert bestimmt und bei einer Abweichung des Ist-Wertes von einem vorgebbaren oder vorgegebenen Sollwert die Länge der Zwischenblätter (15) für einen oder mehrere Materialvorräte derart geändert wird, dass sich der Ist-Wert dem Soll-Wert annähert, und/oder wobei die Regelgröße auf allen Differenzen jeweils zweier Restmengen basiert und als Sollwert vorgegeben oder vorgebbar ist, dass alle Differenzen innerhalb vorgebbarer oder vorgegebener Toleranzen Null sind.

13. Vorrichtung nach einem der Ansprüche 10 bis 12,
wobei eine Messeinrichtung vorgesehen ist, die dazu ausgebildet ist, Restmengen in den Materialvorräten zu bestimmen und an die Steuereinrichtung (39) zu kommunizieren.

14. Vorrichtung zum mehrspurigen Aufschneiden von Lebensmittelprodukten (11), insbesondere Hochgeschwindigkeitsslicer,
mit einer Produktzufuhr (49), die mehrere aufzuschneidende Produkte (11) gleichzeitig einem Schneidbereich zuführt, in welchem sich ein Schneidmesser (51) rotierend und/oder umlaufend bewegt, um die zugeführten Produkte (11) gleichzeitig in Scheiben (13) zu schneiden, und einer Vorrichtung zum mehrspurigen Bereitstellen von bahnförmigem Zwischenblattmaterial nach einem der Ansprüche 10 bis 13.

15. Vorrichtung nach Anspruch 14,
wobei eine gemeinsame Steuereinrichtung (39) vorgesehen ist, die dazu ausgebildet ist, das Aufschneiden der Produkte (11) und das Bereitstellen des Zwischenblattmaterials spurindividuell zu koordinieren.

## Claims

1. A method for a multitrack provision of web-like interleaved sheet material at a cutting region in which products (11) supplied on multiple tracks are cut into slices (13) and interleaved sheets (15) are introduced which are cut off from the provided interleaved sheet material in the cutting region and for which a normal length is predefined which is dependent on the respective application,
in which the material webs (19) are removed from at least two material stores which are each associated with one or more tracks (S), **characterized in that**
the material consumption of at least one material store is impacted during operation, in particular in dependence on the residual quantities in the material stores, by varying the length of the interleaved sheets (15) in the respective track or tracks (S) with respect to the normal length at least for this material store.

2. A method in accordance with claim 1,
wherein the length of the interleaved sheets (15) is varied in that the time period is changed during which the respective material web (19) is ejected into the cutting region and/or in that the speed is changed at which the respective material web (19) is ejected into the cutting region.

3. A method in accordance with claim 1 or claim 2,
wherein the length of the interleaved sheets (15) is varied to the extent that residual quantities in the material stores are at least approximately the same size at all times or at the latest when the material stores have at least largely been consumed or when a predefined or predefinable value for the residual quantities has been reached or when a predefined or predefinable condition relating to the cutting operation has been satisfied.

4. A method in accordance with any one of the preceding claims,
wherein the length of the interleaved sheets (15) is varied such that residual quantities in the material stores tend toward being the same size, and/or wherein the length of the interleaved sheets (15) is varied in time, and/or wherein the length of the interleaved sheets (15) is varied such that the interleaved sheets (15) have the same length within a respective portion comprising a plurality of slices (13) having interleaved sheets (15), and/or wherein the material consumption is only impacted by reducing the normal length.

5. A method in accordance with any one of the preceding claims,
wherein the material consumption is impacted by increasing the normal length, and indeed either exclusively or in addition to a reduction of the normal length for at least one of the other material stores.

6. A method in accordance with any one of the preceding claims,
wherein the length of the interleaved sheets (15) is reduced such that the front end of at least one interleaved sheet or of some interleaved sheets (15) is disposed between the respective directly adjacent slices (13).

7. A method in accordance with any one of the preceding claims,
wherein residual quantities in the material stores are determined by means of a measurement device and are communicated to the control device (39).

8. A method in accordance with any one of the preceding claims,
wherein the respective diameter of a material roll (17) forming the material store is measured as a measure for residual quantities in the material stores, and/or wherein the respective weight of the material store is measured as a measure for residual quantities in the material stores, and/or wherein the respective length of the material web (19) which passed through a measurement point arranged downstream of the material store is measured as a measure for residual quantities in the material stores, and/or wherein a respective parameter, in particular the number of revolutions of at least one component or the power consumption of a removal device (21, 23) which removes the material web (19) from the material store, is measured as a measure for residual quantities in the material stores.

9. A method in accordance with any one of the preceding claims,
wherein at least some portions which each comprise a plurality of slices (13) having interleaved sheets (15) are checked as to whether the length changes of the interleaved sheets (15) are within predefinable or predefined limits.

10. An apparatus for the multitrack provision of web-like interleaved sheet material at a cutting region in which products (11) supplied on multiple tracks are cut into slices (13) and interleaved sheets (15) are introduced which are cut off from the provided interleaved sheet material in the cutting region and for which a normal length is predefined which is dependent on the respective application,
wherein at least two material stores are provided which are each associated with one or more tracks (S) and from which the individual material webs (19) can be removed,
**characterized in that**
the material consumption of at least one material store can be impacted by an internal or external control device (39) during operation, in particular in dependence on the residual quantities in the material stores, by varying the length of the interleaved sheets (15) in the respective track or tracks (S) with respect to the normal length at least for this material store, with the apparatus in particular being operable in accordance with a method in accordance with any one of the claims 1 to 9.

11. An apparatus in accordance with claim 10,
wherein a multitrack output device (71) which comprises a driven feed roll (74) for each track (S), which feed roll (74) forms a feed gap for the material web (19) together with a counter-unit (75), is provided for the ejection of the material webs (19) into the cutting region and is controllable by means of the control device (39) by an operation of the individual feed rolls (74) individually per track.

12. An apparatus in accordance with claim 10 or claim 11,
wherein the control device (39) is configured to carry out a regulation in which a regulation variable which is directly or indirectly dependent on residual quantities in the material stores is determined as an actual value and the length of the interleaved sheets (15) is changed for one or more material stores on a deviation of the actual value from a predefinable or predefined desired value such that the actual value approximates the desired value, and/or wherein the regulation variable is based on all the differences of a respective two residual quantities and is predefined or predefinable as the desired value such that all the differences within predefinable or predefined tolerances are zero.

13. An apparatus in accordance with any one of the claims 10 to 12,
wherein a measurement device is provided which is configured to determine residual quantities in the material stores and to communicate them to the control device (39).

14. An apparatus for a multitrack slicing of food products (11), in particular a high-speed slicer,
comprising a product feed (49) which simultaneously supplies a plurality of products (11) to be sliced to a cutting region in which a cutting blade (51) moves in a rotating and/or revolving manner to simultaneously cut the supplied products (11) into slices (13); and
an apparatus for the multitrack provision of web-like interleaved sheet material in accordance with any one of the claims 10 to 13.

15. An apparatus in accordance with claim 14,
wherein a common control device (39) is provided which is configured to coordinate the slicing of the products (11) and the provision of the interleaved sheet material individually per track.

## Revendications

1. Procédé pour la fourniture en une ou plusieurs voies de matériau de feuille intermédiaire en forme de bande au niveau d'une zone de découpe dans laquelle des produits (11) alimentés en une ou plusieurs voies sont découpés en tranches (13) et des feuilles intermédiaires (15) sont interposées, qui sont séparées du matériau de feuille intermédiaire fourni dans la zone de découpe et pour lesquelles une longueur normale est imposée qui dépend de l'application respective,
dans lequel les bandes de matériau (19) sont prélevées d'au moins deux réserves de matériau qui sont associées chacune à une ou à plusieurs voies (S),
**caractérisé en ce que**
pendant le fonctionnement, la consommation de matériau d'au moins une réserve de matériau est influencée, en particulier en fonction des quantités résiduelles dans les réserves de matériau, du fait que, au moins pour cette réserve de matériau dans la ou les voies concernées (S), la longueur des feuilles intermédiaires (15) peut être modifiée par rapport à la longueur normale.

2. Procédé selon la revendication 1,
dans lequel la longueur des feuilles intermédiaires (15) est modifiée par modification de la période de temps pendant laquelle la bande de matériau concernée (19) est éjectée dans la zone de découpe et/ou par modification de la vitesse à laquelle la bande de matériau concernée (19) est éjectée dans la zone de découpe.

3. Procédé selon la revendication 1 ou 2,
dans lequel la longueur des feuilles intermédiaires (15) est modifiée de telle sorte que les quantités résiduelles dans les réserves de matériau sont au moins approximativement de taille égale à tout moment ou au plus tard lorsque les réserves de matériau sont au moins largement épuisées ou lorsqu'une valeur prédéfinie ou prédéfinissable pour les quantités résiduelles est atteinte ou lorsqu'une condition prédéfinie ou prédéfinissable relative à l'opération de découpe est satisfaite.

4. Procédé selon l'une des revendications précédentes,
dans lequel la longueur des feuilles intermédiaires (15) est modifiée de telle sorte que les quantités résiduelles dans les réserves de matériau tendent à avoir la même taille, et/ou la longueur des feuilles intermédiaires (15) est variée dans le temps, et/ou la longueur des feuilles intermédiaires (15) est modifiée de telle sorte qu'à l'intérieur d'une portion comprenant plusieurs tranches (13) avec des feuilles intermédiaires (15), les feuilles intermédiaires (15) ont la même longueur, et/ou la consommation de matériau est influencée exclusivement par réduction de la longueur normale.

5. Procédé selon l'une des revendications précédentes,
dans lequel la consommation de matériau est influencée par augmentation de la longueur normale, soit exclusivement, soit en supplément à une réduction de la longueur normale pour l'une au moins des autres réserves de matériau.

6. Procédé selon l'une des revendications précédentes,
dans lequel la longueur des feuilles intermédiaires (15) est réduite de telle sorte que l'extrémité avant d'au moins une ou de certaines des feuilles intermédiaires (15) est située entre les tranches respectives directement adjacentes (13).

7. Procédé selon l'une des revendications précédentes,
dans lequel les quantités résiduelles dans les réserves de matériau sont déterminées à l'aide d'un moyen de mesure et sont communiquées au moyen de commande (39).

8. Procédé selon l'une des revendications précédentes,
dans lequel le diamètre d'un rouleau de matériau (17) formant la réserve de matériau est mesuré comme valeur respective des quantités résiduelles dans les réserves de matériau, et/ou le poids de la réserve de matériau est mesuré comme valeur respective des quantités résiduelles dans les réserves de matériau, et/ou la longueur de la bande de matériau (19), qui a traversé un emplacement de mesure disposé en aval de la réserve de matériau, est mesurée comme valeur respective des quantités résiduelles dans les réserves de matériau, et/ou un paramètre, en particulier le nombre de tours d'au moins un composant ou la consommation de courant, d'un moyen de prélèvement (21, 23) qui prélève la bande de matériau (19) de la réserve de matériau est mesuré comme valeur respective de quantités résiduelles dans les réserves de matériau.

9. Procédé selon l'une des revendications précédentes,
dans lequel au moins certaines portions comprenant plusieurs tranches (13) respectives avec des feuilles intermédiaires (15) sont vérifiées pour savoir si les modifications de longueur des feuilles intermédiaires (15) sont dans des limites prédéfinissables ou prédéfinies.

10. Dispositif pour la fourniture en une ou plusieurs voies de matériau de feuille intermédiaire en forme de bande au niveau d'une zone de découpe dans laquelle des produits (11) alimentés en une ou plusieurs voies sont découpés en tranches (13) et des feuilles intermédiaires (15) sont interposées, qui sont séparées du matériau de feuille intermédiaire fourni dans la zone de découpe et pour lesquelles une longueur normale est imposée qui dépend de l'application respective,
dans lequel
il est prévu au moins deux réserves de matériau, qui sont chacune associées à une ou à plusieurs voies (S) et desquelles les bandes de matériau individuelles (19) peuvent être prélevées,
**caractérisé en ce que**
pendant le fonctionnement, la consommation de matériau d'au moins une réserve de matériau peut être influencée par un moyen de commande interne ou externe (39), en particulier en fonction des quantités résiduelles dans les réserves de matériau, du fait que, au moins pour cette réserve de matériau dans la ou les voies concernées (S), la longueur des feuilles intermédiaires (15) peut être modifiée par rapport à la longueur normale, le dispositif pouvant être exploité en particulier par un procédé selon l'une des revendications 1 à 9.

11. Dispositif selon la revendication 10,
dans lequel, pour l'éjection des bandes de matériau (19) dans la zone de découpe, il est prévu un moyen de distribution (71) à plusieurs voies, qui comprend pour chaque voie (S) un cylindre d'avance (74) entraîné formant, conjointement avec un ensemble antagoniste (75), une emprise d'avance pour la bande de matériau (19), et qui peut être commandé à l'aide du moyen de commande (39) par exploitation des cylindres d'avance individuels (74) individuellement par voie.

12. Dispositif selon la revendication 10 ou 11,
dans lequel le moyen de commande (39) est réalisé pour exécuter une régulation dans laquelle une grandeur de régulation dépendant directement ou indirectement de quantités résiduelles dans les réserves de matériau est déterminée en tant que valeur réelle et, en cas d'écart de la valeur réelle par rapport à une valeur de consigne prédéfinissable ou prédéfinie, la longueur des feuilles intermédiaires (15) est modifiée pour une ou plusieurs réserves de matériau, de telle sorte que la valeur réelle se rapproche de la valeur de consigne, et/ou la grandeur de régulation est basée sur toutes les différences entre deux quantités résiduelles respectives, et, en tant que valeur de consigne, il est prédéfini ou prédéfinissable que toutes les différences à l'intérieur de tolérances prédéfinissables ou prédéfinies sont nulles.

13. Dispositif selon l'une des revendications 10 à 12,
dans lequel il est prévu un moyen de mesure qui est réalisé pour déterminer les quantités résiduelles dans les réserves de matériaux et pour les communiquer au moyen de commande (39).

14. Dispositif pour la découpe en une ou plusieurs voies de produits alimentaires (11), en particulier trancheuse à haute performance,
comportant une alimentation en produits (49) qui amène plusieurs produits à trancher (11) simultanément jusqu'à une zone de découpe dans laquelle une lame de coupe (51) se déplace en rotation et/ou en révolution afin de découper simultanément les produits amenés (11) en tranches (13), et un dispositif selon l'une des revendications 10 à 13 pour fournir en plusieurs voies un matériau de feuille intermédiaire en forme de bande.

15. Dispositif selon la revendication 14,
dans lequel est prévu un moyen de commande commun (39) qui est réalisé pour coordonner individuellement par voie le tranchage des produits (11) et la fourniture du matériau de feuille intermédiaire.
